(19) Europäisches Patentamt
European Patent Office
Office européen des brevets

(11) **EP 3 570 611 A1**

(12) **EUROPEAN PATENT APPLICATION**
published in accordance with Art. 153(4) EPC

(43) Date of publication:
**20.11.2019 Bulletin 2019/47**

(51) Int Cl.:
***H04W 72/04*** (2009.01)

(21) Application number: **18861926.6**

(22) Date of filing: **17.09.2018**

(86) International application number:
**PCT/CN2018/106053**

(87) International publication number:
**WO 2019/062585 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2017 CN 201710943984**

(71) Applicant: **Huawei Technologies Co., Ltd.
Longgang District
Shenzhen, Guangdong 518129 (CN)**

(72) Inventors:
• **LI, Hua
Shenzhen
Guangdong 518129 (CN)**
• **TANG, Hao
Shenzhen
Guangdong 518129 (CN)**
• **ABDOLI, Javad
Shenzhen
Guangdong 518129 (CN)**
• **TANG, Zhenfei
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **RESOURCE SCHEDULING METHOD, NETWORK DEVICE, AND COMMUNICATION DEVICE**

(57) Embodiments of this application provide a resource scheduling method, a network device, and a communications device, and relate to the communications field, to improve resource scheduling flexibility. The method includes: sending, by a network device, first resource scheduling information and second resource scheduling information to a communications device on a first frequency domain resource, where the first resource scheduling information includes first resource allocation information, and the first resource allocation information is used to indicate a first resource in the first frequency domain resource; the second resource scheduling information includes identification information of a second frequency domain resource and second resource allocation information, the second resource allocation information is used to indicate a second resource in the second frequency domain resource, and the second resource scheduling information is used to instruct to switch from the first frequency domain resource to the second frequency domain resource; and both the first frequency domain resource and the second frequency domain resource are frequency domain resources that belong to a carrier. The embodiments of this application are applicable to a cross-resource scheduling scenario.

FIG. 7

**Description**

This application claims priority to Chinese Patent Application No. 201710943984.0, filed with the Chinese Patent Office on September 30, 2017 and entitled "RESOURCE SCHEDULING METHOD, NETWORK DEVICE, AND COMMUNICATIONS DEVICE", which is incorporated herein by reference in its entirety.

**TECHNICAL FIELD**

Embodiments of this application relate to the communications field, and in particular, to a resource scheduling method, a network device, and a communications device.

**BACKGROUND**

In long term evolution (Long Term Evolution, LTE), downlink control information (Downlink Control Information, DCI) sent by a network device to a terminal includes scheduling information of a data channel, and the network device transmits data with the terminal through the data channel based on the scheduling information. In new radio (New Radio, NR), resource scheduling design is also a key research topic.

**SUMMARY**

Embodiments of this application provide a resource scheduling method, a network device, and a communications device, to improve resource scheduling flexibility.
To achieve the foregoing objective, the following technical solutions are used in the embodiments of this application:
According to a first aspect, an embodiment of this application provides a resource scheduling method, including: sending, by a network device, first resource scheduling information and second resource scheduling information to a communications device on a first frequency domain resource, where the first resource scheduling information includes first resource allocation information, and the first resource allocation information is used to indicate a first resource in the first frequency domain resource; and the second resource scheduling information includes identification information of a second frequency domain resource and second resource allocation information, the second resource allocation information is used to indicate a second resource in the second frequency domain resource, and the second resource scheduling information is used to instruct to switch from the first frequency domain resource to the second frequency domain resource; and both the first frequency domain resource and the second frequency domain resource are frequency domain resources that belong to a carrier.
According to the resource scheduling method provided in this embodiment of this application, the network device sends the first resource scheduling information and the second resource scheduling information to the communications device on the first frequency domain resource, to instruct, by using the first resource scheduling information, the communications device to schedule the first resource in the first frequency domain resource, and instruct, by using the second resource scheduling information, the communications device to switch from the first frequency domain resource to the second frequency domain resource and communicate with the network device on the second resource. The communications device may adjust, based on the first resource allocation information in the first resource scheduling information, from current frequency domain of the first frequency domain resource to the first resource in the first frequency domain resource. This can implement flexible resource scheduling in the first frequency domain resource. In addition, the communications device may switch from the first frequency domain resource to second frequency domain of the second frequency domain resource based on the second resource allocation information, for scheduling. This implements flexible scheduling between the two different frequency domain resources. Furthermore, when switching between the different frequency domain resources is implemented, resource allocation in the second frequency domain resource may be further implemented. This reduces a latency compared with a conventional technical solution in which resource allocation in a frequency domain resource is performed after frequency domain resource switching is implemented.
In a possible implementation, the first resource scheduling information and the second resource scheduling information meet at least one of the following conditions: a size of the first resource scheduling information is different from a size of the second resource scheduling information; and a format of the first resource scheduling information is different from a format of the second resource scheduling information. In this way, the communications device can distinguish between functions of all pieces of resource scheduling information based on sizes or formats of the resource scheduling information. For example, the first resource scheduling information may be used to adjust resources in a same frequency domain resource to change a resource used to communicate with the network device, and the second resource scheduling information is used to switch from a frequency domain resource to another frequency domain resource.

In a possible implementation, the first resource scheduling information meets at least one of the following conditions: the first resource scheduling information corresponds to different sizes in different transmission manners; and the first resource scheduling information corresponds to different formats in different transmission manners. In this way, the communications device can determine a function of the first resource scheduling information.

In a possible implementation, a transmission manner corresponding to the second resource scheduling information is a transmit diversity manner or a single-port manner. In this way, the communications device can determine a function of the second resource scheduling information.

In a possible implementation, the second frequency domain resource includes a second uplink frequency domain resource and a second downlink frequency domain resource, a center frequency point of the second uplink frequency domain resource is consistent with a center frequency point of the second downlink frequency domain resource, the identification information of the second frequency domain resource includes a first identifier, and the first identifier indicates the second frequency domain resource. The identification information of the second frequency domain resource is set to an identifier of the second uplink frequency domain resource and the second downlink frequency domain resource, so that the communications device can determine to switch from the first frequency domain resource to the second uplink frequency domain resource and the second downlink frequency domain resource to communicate with the network device. In addition, the communications device can further respectively determine, based on the second resource allocation information, an uplink resource and a downlink resource that are used to communicate with the network device in the second uplink frequency domain resource and the second downlink frequency domain resource. Furthermore, the center frequency point of the second uplink frequency domain resource is consistent with the center frequency point of the second downlink frequency domain resource, so that the communications device does not need to adjust a frequency point.

In a possible implementation, the second frequency domain resource is at least one of a second uplink frequency domain resource and a second downlink frequency domain resource. In this implementation, by using the resource scheduling information, the network device may instruct the communications device to switch from the first frequency domain resource to the second uplink frequency domain resource, or may instruct the communications device to switch from the first frequency domain resource to the second downlink frequency domain resource, or may instruct the communications device to switch from the first frequency domain resource to both the second uplink frequency domain resource and the second downlink frequency domain resource.

In a possible implementation, the second resource scheduling information is in a same size when the second resource scheduling information is used to schedule the second uplink frequency domain resource and when the second resource scheduling information is used to schedule the second downlink frequency domain resource. This can reduce a quantity of blind detection times of the communications device.

In a possible implementation, the first resource allocation information corresponds to a first resource allocation type or a second resource allocation type, the second resource allocation information corresponds to the second resource allocation type, and the first resource allocation type is different from the second resource allocation type.

In a possible implementation, the second resource allocation information indicates a frequency domain resource start point and a frequency domain resource length.

In a possible implementation, that the resource scheduling information is used to instruct to switch from the first frequency domain resource to the second frequency domain resource includes: the resource scheduling information jointly instructs, by using the identification information of the second frequency domain resource and carrier identification information, to switch from the first frequency domain resource to the second frequency domain resource, where the carrier identification information is configured by the network device for the communications device.

According to a second aspect, an embodiment of this application provides a resource scheduling method, including: receiving, by a communications device on a first frequency domain resource, first resource scheduling information and second resource scheduling information that are sent by a network device, where the first resource scheduling information includes first resource allocation information, and the first resource allocation information is used to indicate a first resource in the first frequency domain resource; the second resource scheduling information includes identification information of a second frequency domain resource and second resource allocation information, the second resource allocation information is used to indicate a second resource in the second frequency domain resource, and the second resource scheduling information is used to instruct to switch from the first frequency domain resource to the second frequency domain resource; and both the first frequency domain resource and the second frequency domain resource are frequency domain resources that belong to a carrier; determining, by the communications device, the second frequency domain resource based on the identification information of the second frequency domain resource, and determining, based on the second resource allocation information, the second resource that is used to communicate with the network device in the second frequency domain resource; and determining, by the communications device based on the first resource allocation information, the first resource that is used to communicate with the network device in the first frequency domain resource.

In a possible implementation, the terminal determines the second resource from the second frequency domain resource based on a frequency domain resource start point and a frequency domain resource length that are indicated by the second resource allocation information.

In a possible implementation, the first resource scheduling information and the second resource scheduling information meet at least one of the following conditions: a size of the first resource scheduling information is different from a size of the second resource scheduling information; and a format of the first resource scheduling information is different from a format of the second resource scheduling information.

In a possible implementation, in a second possible implementation of the second aspect, the first resource scheduling information meets at least one of the following conditions: the first resource scheduling information corresponds to different sizes in different transmission manners; and the first resource scheduling information corresponds to different formats in different transmission manners.

In a possible implementation, a transmission manner corresponding to the second resource scheduling information is a transmit diversity manner or a single-port manner.

In a possible implementation, the second frequency domain resource includes a second uplink frequency domain resource and a second downlink frequency domain resource, a center frequency point of the second uplink frequency domain resource is consistent with a center frequency point of the second downlink frequency domain resource, the identification information of the second frequency domain resource includes a first identifier, and the first identifier indicates the second frequency domain resource.

In a possible implementation, the second frequency domain resource is at least one of a second uplink frequency domain resource and a second downlink frequency domain resource.

In a possible implementation, the second resource scheduling information is in a same size when the second resource scheduling information is used to schedule the second uplink frequency domain resource and when the second resource scheduling information is used to schedule the second downlink frequency domain resource.

In a possible implementation, the second frequency domain resource includes at least one of a second uplink frequency domain resource and a second downlink frequency domain resource.

In a possible implementation, that the resource scheduling information is used to instruct to switch from the first frequency domain resource to the second frequency domain resource includes: the resource scheduling information jointly instructs, by using the identification information of the second frequency domain resource and carrier identification information, to switch from the first frequency domain resource to the second frequency domain resource, where the carrier identification information is configured by the network device for the communications device.

Correspondingly, according to a third aspect, an embodiment of this application further provides a resource scheduling apparatus, and the apparatus may implement the resource scheduling method in the first aspect. For example, the apparatus may be a network device (for example, a base station) or a chip disposed in the network device. The apparatus may implement the foregoing resource scheduling method by using software or hardware, or by executing corresponding software by using hardware.

In a possible implementation, the apparatus may include a processor and a memory. The processor is configured to support the apparatus in performing the corresponding functions in the various possible implementations of the first aspect. The memory is configured to be coupled to the processor, and the memory stores a program (instruction) and data that are necessary for the apparatus. In addition, the apparatus may further include: a communications interface, configured to support communication between the apparatus and another network element. The communications interface may be a transceiver.

In a possible implementation, the network device includes: a selection unit, configured to select a second frequency domain resource from a plurality of frequency domain resources; and a sending unit, configured to send first resource scheduling information and second resource scheduling information to a communications device on a first frequency domain resource, where the first resource scheduling information includes first resource allocation information, and the first resource allocation information is used to indicate a first resource in the first frequency domain resource; the second resource scheduling information includes identification information of the second frequency domain resource and second resource allocation information corresponding to a second resource allocation type, the second resource allocation information is used to indicate a second resource in the second frequency domain resource, and the second resource scheduling information is used to instruct to switch from the first frequency domain resource to the second frequency domain resource; and both the first frequency domain resource and the second frequency domain resource are frequency domain resources that belong to a carrier.

In a possible implementation, the first resource scheduling information and the second resource scheduling information meet at least one of the following conditions: a size of the first resource scheduling information is different from a size of the second resource scheduling information; and a format of the first resource scheduling information is different from a format of the second resource scheduling information.

In a possible implementation, the first resource scheduling information meets at least one of the following conditions: the first resource scheduling information corresponds to different sizes in different transmission manners; and the first resource scheduling information corresponds to different formats in different transmission manners.

In a possible implementation, a transmission manner corresponding to the second resource scheduling information is a transmit diversity manner or a single-port manner.

In a possible implementation, the second frequency domain resource includes a second uplink frequency domain resource and a second downlink frequency domain resource, a center frequency point of the second uplink frequency domain resource is consistent with a center frequency point of the second downlink frequency domain resource, the identification information of the second frequency domain resource includes a first identifier, and the first identifier indicates the second frequency domain resource.

In a possible implementation, the second frequency domain resource includes at least one of a second uplink frequency domain resource and a second downlink frequency domain resource.

In a possible implementation, the second resource scheduling information is in a same size when the second resource scheduling information is used to schedule the second uplink frequency domain resource and when the second resource scheduling information is used to schedule the second downlink frequency domain resource.

In a possible implementation, that the resource scheduling information is used to instruct to switch from the first frequency domain resource to the second frequency domain resource includes: the resource scheduling information jointly instructs, by using the identification information of the second frequency domain resource and carrier identification information, to switch from the first frequency domain resource to the second frequency domain resource, where the carrier identification information is configured by the network device for the communications device.

In a possible implementation, the second frequency domain resource is at least one of a second uplink frequency domain resource and a second downlink frequency domain resource.

In a possible implementation, the second resource allocation information indicates a frequency domain resource start point and a frequency domain resource length. In a possible implementation, the network device includes at least one processor and at least one transceiver. The at least one processor is coupled to the at least one transceiver. The processor is configured to perform a processing or control operation on a network device side in any one of the first aspect to the possible methods of the first aspect. The transceiver is configured to perform an operation related to receiving or sending on the network device side in any one of the first aspect to the possible implementations of the first aspect.

Optionally, the network device may further include a memory and a bus. The memory stores code and data, and the processor is connected to the memory by using the bus.

Correspondingly, according to a fourth aspect, an embodiment of this application further provides a resource scheduling apparatus, and the apparatus may implement the resource scheduling method in the second aspect. For example, the apparatus may be a communications device or a chip disposed in the communications device. The apparatus may implement the foregoing resource scheduling method by using software or hardware, or by executing corresponding software by using hardware.

In a possible implementation, the apparatus may include at least one processor and at least one memory. The processor is configured to support the apparatus in performing the corresponding functions in the method in the second aspect. The memory is configured to be coupled to the processor, and the memory stores a program (instruction) and data that are necessary for the apparatus. In addition, the apparatus may further include: a communications interface, configured to support communication between the apparatus and another network element. The communications interface may be a transceiver. The memory, the processor, and the transceiver are connected by using lines. The transceiver is configured to perform operations related to message receiving and sending on a communications device side in the method described in any one of the second aspect to the possible implementations of the second aspect. The processor is configured to perform a processing or control operation on the communications device side in the method described in any one of the second aspect to the possible implementations of the second aspect.

In a possible implementation, the communications device includes: a receiving unit, configured to receive, on a first frequency domain resource, first resource scheduling information and second resource scheduling information that are sent by a network device, where the first resource scheduling information includes first resource allocation information, and the first resource allocation information is used to indicate a first resource in the first frequency domain resource; the second resource scheduling information includes identification information of a second resource and second resource allocation information, and the second resource allocation information is used to indicate a second resource in the second frequency domain resource; and both the first frequency domain resource and the second frequency domain resource are resources that belong to a carrier; and a determining unit, configured to: determine the second frequency domain resource based on the identification information of the second frequency domain resource, and determine, based on the second resource allocation information, the second resource that is used to communicate with the network device in the second frequency domain resource, where the determining unit is further configured to determine, based on the first resource allocation information, the first resource that is used to communicate with the network device in the first frequency domain resource.

In a possible implementation, the first resource scheduling information and the second resource scheduling information meet at least one of the following conditions: a size of the first resource scheduling information is different from a size of the second resource scheduling information; and a format of the first resource scheduling information is different from a format of the second resource scheduling information.

In a possible implementation, the first resource scheduling information meets at least one of the following conditions: the first resource scheduling information corresponds to different sizes in different transmission manners; and the first resource scheduling information corresponds to different formats in different transmission manners.

In a possible implementation, a transmission manner corresponding to the second resource scheduling information is a transmit diversity manner or a single-port manner.

In a possible implementation, the identification information of the second frequency domain resource includes a first identifier, and the first identifier is allocated by the network device to the second frequency domain resource.

In a possible implementation, the identification information of the second frequency domain resource includes second identifiers, the second identifier is allocated by the network device to a second uplink frequency domain resource and a second downlink frequency domain resource that are included in the second frequency domain resource, and a center frequency point of the second uplink frequency domain resource is consistent with a center frequency point of the second downlink frequency domain resource.

In a possible implementation, the receiving unit is further configured to receive at least a second identifier allocated by the network device to the second frequency domain resource.

In a possible implementation, the receiving unit is further configured to receive at least a first identifier allocated by the network device to a second uplink frequency domain resource and a second downlink frequency domain resource that are included in the second frequency domain resource, where a center frequency point of the second uplink frequency domain resource is consistent with a center frequency point of the second downlink frequency domain resource.

In a possible implementation, the second frequency domain resource includes a second uplink frequency domain resource and a second downlink frequency domain resource, a center frequency point of the second uplink frequency domain resource is consistent with a center frequency point of the second downlink frequency domain resource, the identification information of the second frequency domain resource includes a first identifier, and the first identifier indicates the second frequency domain resource.

In a possible implementation, the first resource allocation information corresponds to a first resource allocation type, and the second resource allocation information corresponds to a second resource allocation type.

In a possible implementation, the terminal determines the second resource from the second frequency domain resource based on a frequency domain resource start point and a frequency domain resource length that are indicated by the second resource allocation information.

In a possible implementation, the second frequency domain resource includes at least one of a second uplink frequency domain resource and a second downlink frequency domain resource.

In a possible implementation, that the resource scheduling information is used to instruct to switch from the first frequency domain resource to the second frequency domain resource includes: the resource scheduling information jointly instructs, by using the identification information of the second frequency domain resource and carrier identification information, to switch from the first frequency domain resource to the second frequency domain resource, where the carrier identification information is configured by the network device for the communications device.

According to a fifth aspect, a computer storage medium is provided. The computer-readable storage medium stores an instruction. When the instruction is run on a network device, the network device is enabled to perform the resource scheduling method described in any one of the first aspect or the possible designs of the first aspect.

According to a sixth aspect, a computer storage medium is provided. The computer-readable storage medium stores an instruction. When the instruction is run on a communications device, the communications device is enabled to perform the resource scheduling method described in any one of the second aspect or the possible designs of the second aspect.

According to a seventh aspect, a computer program product including an instruction is provided. The computer program product stores the instruction. When the instruction is run on a network device, the network device is enabled to perform the resource scheduling method described in any one of the first aspect or the possible designs of the first aspect.

According to an eighth aspect, a computer program product including an instruction is provided. The computer program product stores the instruction. When the instruction is run on a communications device, the communications device is enabled to perform the resource scheduling method described in any one of the second aspect or the possible designs of the second aspect.

According to a ninth aspect, an embodiment of this application provides a communications chip. The communications chip is applied to a network device and includes at least one processor, at least one memory, and at least one interface circuit. The memory, the interface circuit, and the at least one processor are interconnected by using lines. The at least one memory stores an instruction. The instruction is executed by the processor to perform the resource scheduling method descried in any one of the first aspect or the possible implementations of the first aspect.

According to a tenth aspect, an embodiment of this application provides a communications chip. The communications chip is applied to a communications device and includes at least one processor, at least one memory, and at least one interface circuit. The memory, the interface circuit, and the at least one processor are interconnected by using lines. The at least one memory stores an instruction. The instruction is executed by the processor to perform the resource scheduling method descried in any one of the second aspect or the possible implementations of the second aspect.

According to an eleventh aspect, an embodiment of this application provides a communications system, including the network device described in any one of the third aspect to the possible implementations of the third aspect and the communications device described in any one of the fourth aspect or the possible implementations of the fourth aspect.

## DESCRIPTION OF DRAWINGS

FIG. 1 is a schematic architectural diagram of a system to which a resource scheduling method and apparatus are applied according to an embodiment of this application;
FIG. 2 is a possible schematic location diagram of a frequency resource according to an embodiment of this application;
FIG. 3 is a schematic structural diagram of bandwidth parts included in a system frequency resource according to an embodiment of this application;
FIG. 4 is a schematic diagram of a frequency domain resource according to an embodiment of this application;
FIG. 5 is a schematic diagram of a first resource allocation type according to an embodiment of this application;
FIG. 6 is a schematic diagram of a second resource allocation type according to an embodiment of this application;
FIG. 7 is a schematic flowchart of a resource scheduling method according to an embodiment of this application;
FIG. 8 is a schematic diagram of local resource scheduling according to an embodiment of this application;
FIG. 9 is a schematic diagram of cross-resource scheduling according to an embodiment of this application;
FIG. 10 is a schematic structural diagram 1 of a network device according to an embodiment of this application;
FIG. 11 is a schematic structural diagram 2 of a network device according to an embodiment of this application;
FIG. 12 is a schematic structural diagram 3 of a network device according to an embodiment of this application;
FIG. 13 is a schematic structural diagram 1 of a communications device according to an embodiment of this application;
FIG. 14 is a schematic structural diagram 2 of a communications device according to an embodiment of this application; and
FIG. 15 is a schematic structural diagram 3 of a communications device according to an embodiment of this application.

## DESCRIPTION OF EMBODIMENTS

It should be noted that in embodiments of this application, the word such as "example" or "for example" is used to represent giving an example, an illustration, or a description. Any embodiment or design solution described as an "example" or "for example" in the embodiments of this application should not be explained as being more preferred or having more advantages than another embodiment or design solution. Exactly, use of the word such as "example" or "for example" is intended to present a related concept in a specific manner.

In the embodiments of this application, "of (English: of)", "corresponding (English: corresponding, relevant)", and "corresponding (English: corresponding)" may be interchangeably used sometimes. It should be noted that these terms express consistent meanings when differences between these terms are not emphasized.

In this application, "at least one" means "one or more", and "plurality of" means "two or more". The term "and/or" describes an association relationship between associated objects and represents that three relationships may exist. For example, A and/or B may represent the following cases: Only A exists; both A and B exist; and only B exists, where A and B may be singular or plural. The character "/" generally indicates an "or" relationship between the associated objects. The term "at least one of the following items (pieces)" or a similar expression thereof means any combination of these items, including any combination of singular items (pieces) or plural items (pieces). For example, at least one of a, b, or c may represent a, b, c, a-b, a-c, b-c, or a-b-c, where a, b, and c may be singular or plural. In addition, for ease of clearly describing the technical solutions in the embodiments of this application, words such as "first" and "second" are used in the embodiments of this application to distinguish between same items or similar items that have basically the same functions or purposes. A person skilled in the art may understand that the words such as "first" and "second" impose no limitation on a quantity or an execution sequence, and the words such as "first" and "second" also impose no limitation that objects described by using these words are definitely different.

The terms such as "first" and "second" in the embodiments of this application are merely intended to distinguish between different objects, but constitute no limitation on a sequence of these different objects. For example, a first frequency domain resource and a second frequency domain resource are merely intended to distinguish between different frequency domain resources, but constitute no limitation on a sequence of the first frequency domain resource and the second frequency domain resource.

For ease of understanding the technical solutions in the embodiments of this application, the following first briefly describes related technologies in the embodiments of this application.

Carrier: Carriers in the embodiments of this application include a carrier in a non-carrier aggregation (carrier aggregation, CA) scenario and a component carrier (component carrier, CC) in CA. The CC in the CA scenario may be a primary CC or a secondary CC. A serving cell in the CA scenario may be a primary serving cell (primary serving cell, PCell) or a secondary serving cell (secondary serving cell, Scell). For ease of description, in some scenarios of the embodiments of this application, the carrier in the non-CA scenario and the CC in the CA scenario are collectively referred to as carriers. This is not specially limited in the embodiments of this application. In addition, a part used for uplink transmission in a carrier or in a serving cell may be understood as an uplink resource or an uplink carrier, and a part used for downlink transmission in the carrier or in the serving cell may be understood as a downlink resource or a downlink carrier. For example, in a frequency division duplex (frequency division duplex, FDD) system, a frequency domain resource used for uplink transmission in a carrier may be understood as an uplink resource or an uplink carrier, and a frequency domain resource used for downlink transmission in the carrier may be understood as a downlink resource or a downlink carrier. Alternatively, for example, in a TDD system, a time domain resource used for uplink transmission in a carrier may be understood as an uplink resource or an uplink carrier, and a time domain resource used for downlink transmission in the carrier may be understood as a downlink resource or a downlink carrier.

Operating bandwidth: an active (active) bandwidth part (Bandwidth Part, BWP) of a terminal. The operating bandwidth includes an uplink operating bandwidth and a downlink operating bandwidth. The uplink operating bandwidth is an active uplink BWP of the terminal, and the downlink operating bandwidth is an active downlink BWP of the terminal. This is centrally described herein, and is not described again below.

Bandwidth part: some frequency domain resources allocated by a base station to the terminal in a carrier, a carrier bandwidth, or a system bandwidth. A size of the BWP is less than or equal to a bandwidth capability of the terminal, namely, a maximum bandwidth supported by the terminal. In addition, the BWP is consecutive frequency domain resources. For example, the BWP may include a plurality of consecutive subcarriers. For another example, the BWP may include a plurality of consecutive physical resource blocks (Physical Resource Block, PRB). The terminal can support a plurality of BWPs, in other words, the base station can configure the plurality of BWPs for the terminal. When the plurality of BWPs are configured, the BWPs may overlap or may not overlap. In addition, frequency domain resources included in different BWPs may have a same subcarrier spacing or may have different subcarrier spacings.

The subcarrier spacing is a frequency domain length of a resource element (resource element, RE), and a value of the subcarrier spacing may include 15 KHz, 30 KHz, 60 KHz, or the like.

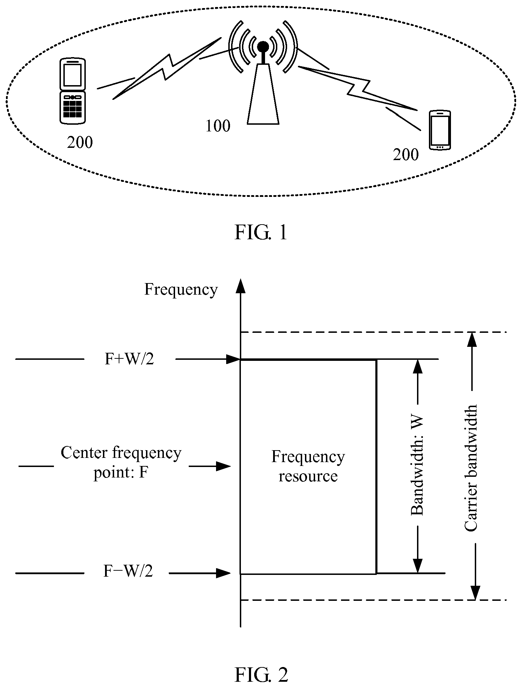

FIG. 1 is a schematic architectural diagram of a communications system to which a resource scheduling method is applied according to an embodiment of this application. As shown in FIG. 1, the communications system includes at least one network device 100 (FIG. 1 shows only one network device) and one or more communications devices 200 (FIG. 1 shows only two communications devices) connected to the network device 100.

The network device 100 may be a device configured to communicate with the communications device 200. The network device 100 is configured to provide a wireless access service for the communications device 200. The network device 100 may be an access point (access point, AP) in a wireless local area network (Wireless Local Area Network, WLAN), or a base transceiver station (Base Transceiver Station, BTS) in the global system for mobile communications (global system for mobile communication, GSM) or code division multiple access (code division multiple access, CDMA); or may be a NodeB (NodeB, NB) in wideband code division multiple access (Wideband Code Division Multiple Access, WCDMA); or may be an evolved NodeB (evolved Node B, eNB or eNodeB) in long term evolution (Long Term Evolution, LTE), a relay node, an access point, a vehicle-mounted device, a wearable device, a network device (for example, a 5G base station (NR NodeB, gNB)) in a future 5G network, a network device in a future evolved public land mobile network (public land mobile network, PLMN) network, or the like.

In addition, in this embodiment of this application, the network device 100 provides a service for a cell, and the communications device 200 communicates with the network device 100 by using a transmission resource (for example, a frequency domain resource, namely, a spectrum resource) used in the cell. The cell may be a cell corresponding to the network device 100 (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells are characterized by a small coverage area and low transmit power, and are applicable to providing a high-rate data transmission service.

Depending on a used wireless communications technology, the base station may also be referred to as a NodeB (NodeB), an evolved NodeB (evolved NodeB, eNodeB), an access point (Access Point, AP), or the like. In addition, based on a size of a provided service coverage area, base stations may be alternatively classified into a macro base station for providing a macro cell (Macro cell), a micro base station for providing a micro cell (Pico cell), a femto base station for providing a femto cell (Femto cell), and the like. With continuous evolution of wireless communications technologies, another name may be used for a future base station.

The communications device 200 may be various wireless communications devices, chips, or the like having a wireless communication function, for example, may be user equipment (user equipment, UE), a terminal device, a mobile cellular phone, a cordless phone, a personal digital assistant (Personal Digital Assistant, PDA), a smartphone, a notebook computer, a tablet computer, a wireless data card, a wireless modulator and demodulator (Modulator demodulator, Modem), or a wearable device such as a smartwatch. With emergence of Internet of things (Internet of Things, IOT) technologies, more devices that previously have no communication function, for example without limitation to, a household appliance, a vehicle, a tool device, a serving device, and a serving facility, start to obtain the wireless communication function by being configured with wireless communications units, so that the devices can access a wireless communications network, and accept remote control. This type of device has the wireless communication function because this type of device is configured with the wireless communications unit. Therefore, this type of device also belongs to wireless communications devices. In addition, the communications device may also be referred to as a mobile station, a mobile device, a mobile terminal, or a wireless terminal. The communications device may be a handheld device having the wireless communication function, a computing device or another processing device connected to a wireless modulator and demodulator, a vehicle-mounted device, a wearable device, a terminal in a future 5G network, a terminal in a future evolved PLMN network, or the like.

It should be noted that the communications system shown in FIG. 1 is merely used as an example, and is not intended to limit the technical solutions in the embodiments of this application. A person skilled in the art should understand that in a specific implementation process, the communications system may further include other devices, for example without limitation to, a base station controller (Base Station Controller, BSC). In addition, a quantity of communications devices and a quantity of network devices may also be configured based on a specific requirement.

In a wireless communications system, a base station may wirelessly communicate with UE by using an air interface resource. The air interface resource includes a frequency domain resource (which may also be referred to as a frequency resource). The frequency domain resource may belong to a set frequency range. The frequency range may also be referred to as a band (band) or a frequency band. In frequency domain, a center point of the frequency domain resource may be referred to as a center frequency point, and a width of the frequency domain resource may be referred to as a bandwidth (bandwidth, BW). For example, FIG. 2 is a possible schematic location diagram of a frequency domain resource. As shown in FIG. 2, the frequency domain resource may be some or all resources in a band, and a bandwidth of the frequency domain resource is W, and a frequency of a center frequency point is F. Frequencies of boundary points of the frequency domain resource are respectively F-W/2 and F+W/2. This may be alternatively described as follows: A frequency of a highest frequency point in the frequency domain resource is F+W/2, and a frequency of a lowest frequency point in the frequency domain resource is F-W/2. As shown in FIG. 2, the bandwidth of the frequency domain resource is lower than or equal to a bandwidth to which the frequency domain resource belongs.

In the wireless communications system, a frequency domain resource used for downlink communication may be the same as or may be different from a frequency domain resource used for uplink communication.

When the base station wirelessly communicates with the UE by using a frequency domain resource, the base station manages a system frequency resource, and allocates a frequency domain resource to the UE from the system frequency resource, so that the base station can communicate with the UE by using the allocated frequency domain resource. The system frequency resource may be described as a frequency resource that can be managed and allocated by the base station, or may be described as a frequency resource that can be used for communication between the base station and the UE. In frequency domain, a width of the system frequency resource may be referred to as a bandwidth of the system frequency resource, or may be referred to as a system bandwidth, a carrier bandwidth, or a transmission bandwidth.

A possible design in which the base station allocates the frequency domain resource to the UE is as follows: The base station configures a bandwidth part (Bandwidth Part, BWP) for the UE from the system frequency resource, and the base station performs scheduling for the UE in the configured bandwidth part. This may be alternatively described as follows: The base station configures a bandwidth part for the UE from the system frequency resource, so that the base station can allocate some or all resources in the configured bandwidth part to the UE for communication between the base station and the UE. The bandwidth part is included in the system frequency resource; and may be some consecutive or inconsecutive resources in the system frequency resource, or may be all resources in the system frequency resource. The bandwidth part may also be referred to as a frequency domain resource, a frequency resource part, some frequency resources, carrier bandwidth part, or another name. When the bandwidth part is a segment of consecutive resources in the system frequency resource, the bandwidth part may also be referred to as a subband, a narrowband, or another name.

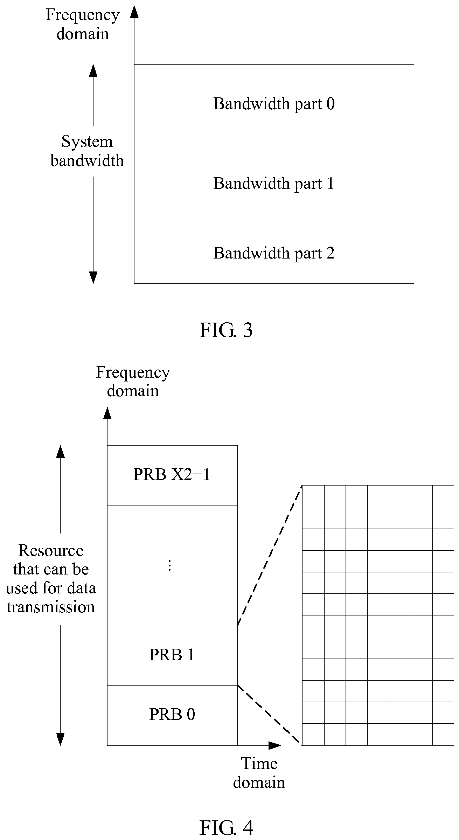

For example, FIG. 3 is a possible schematic structural diagram of bandwidth parts included in a system frequency resource. As shown in FIG. 3, the system frequency resource includes three different bandwidth parts: a bandwidth part 0, a bandwidth part 1, and a bandwidth part 2. During actual application, the system frequency resource may include any integral quantity of bandwidth parts.

The resource scheduling method provided in the embodiments of this application is applicable to the following scenarios:

Scenario 1: high-bandwidth scenario

In a communications system, as a service volume of a terminal increases and a quantity of terminals increases, a service volume of a system significantly increases. Therefore, a design in which a system bandwidth is a high bandwidth is put forward in an existing communications system, to provide a relatively large quantity of system resources, so that a relatively high data transmission rate can be provided. In a communications system in which a system bandwidth is a high bandwidth, considering costs of a terminal and a service volume of the terminal, a bandwidth supported by the terminal may be lower than the system bandwidth. A higher bandwidth supported by the terminal indicates a stronger processing capability of the terminal, and may indicate a higher data transmission rate of the terminal and higher design costs of the terminal. The bandwidth supported by the terminal may also be referred to as a bandwidth capability of the terminal or a terminal bandwidth capability. For example, in a 5G system, a maximum system bandwidth may be 400 MHz, and a bandwidth capability of a terminal may be 20 MHz, 50 MHz, 100 MHz, or the like.

In the communications system in which the system bandwidth is a high bandwidth, because the bandwidth capability of the terminal is lower than the system bandwidth, a base station may configure a bandwidth part for the terminal from a system frequency resource, where a bandwidth of the bandwidth part is lower than or equal to the bandwidth capability of the terminal. When the terminal communicates with the base station, the base station may allocate, to the terminal, some or all resources in the bandwidth part configured for the terminal, for communication between the base station and the terminal.

Scenario 2: multi-system parameter scenario

In a wireless communications system, for example, in a 5G system, to support more service types and/or communication scenarios, a design that supports a plurality of parameters is put forward. Parameters may be separately set for different service types and/or communication scenarios. The parameter includes at least one of a subcarrier spacing and a cyclic prefix (cyclic prefix, CP). In a process in which the 3rd generation partnership project (third generation partnership project, 3GPP) studies and formulates a standard of the wireless communications system, an English name of the parameter may also be referred to as a numerology.

In a possible configuration, a base station may configure a plurality of bandwidth parts in a system frequency resource, and separately configure numerologies for all of the plurality of bandwidth parts, to support a plurality of service types and/or communication scenarios in the system frequency resource. Different bandwidth parts may be of a same numerology frame structure, or may be of different numerology frame structures. This is not limited in the embodiments of this application.

When a terminal communicates with the base station, the base station may determine, based on a service type and/or a communication scenario that correspond/corresponds to the communication, a numerology A used for communication, so that the base station can configure a corresponding bandwidth part for the terminal based on the numerology A. When the terminal communicates with the base station, the base station may allocate, to the terminal, some or all resources in the bandwidth part configured for the terminal, for communication between the base station and the terminal.

Scenario 3: bandwidth fallback

When a terminal communicates with a base station, the base station may configure a bandwidth part for the terminal based on a service volume of the terminal, to save power consumption of the terminal.

For example, if the terminal has no service, the terminal may receive control information only in a relatively small bandwidth part, so that a task volume of radio frequency processing and a task volume of baseband processing of the terminal can be reduced, thereby reducing power consumption of the terminal. If the terminal has a relatively small service volume, the base station may configure a bandwidth part with a relatively low bandwidth for the terminal, so that a task volume of radio frequency processing and a task volume of baseband processing of the terminal can be reduced, thereby reducing power consumption of the terminal. If the terminal has a relatively large service volume, the base station may configure a bandwidth part with a relatively high bandwidth for the terminal, so that a higher data transmission rate can be provided. When the terminal communicates with the base station, the base station may allocate, to the terminal, some or all resources in the bandwidth part configured for the terminal, for communication between the base station and the terminal.

In a wireless communications system, for example, in a communications system that is based on orthogonal frequency division multiplexing (orthogonal frequency division multiplexing, OFDM), in frequency domain, a resource that can be used for data transmission includes several resource lattices, one resource lattice corresponds to one subcarrier, and one physical resource block (physical resource block, PRB) has X1 resource lattices, which may be alternatively described as follows: One PRB includes X1 subcarriers. X1 is an integer greater than 1.

For example, X1 is 12. The resource that can be used for data transmission may be some or all resources in a system resource, or may be some or all resources in a bandwidth part. This is not limited in the embodiments of this application. A bandwidth of the resource that can be used for data transmission may be described as X2 PRBs, and X2 is an integer greater than or equal to 1. For the PRBs in the resource that can be used for data transmission, the PRBs may be sequentially numbered from 0 to X2-1 in a frequency increase direction, to obtain number values of the PRBs. The term "number value" may also be described as "identifier" or "index". In time domain, one PRB may include X3 symbols, and X3 is an integer greater than or equal to 1. For example, X3 is 7 or 14. For example, one PRB includes 12 resource lattices in frequency domain and includes seven symbols in time domain. FIG. 4 is a possible schematic structural diagram of a bandwidth of a resource that can be used for data transmission. As shown in FIG. 4, the bandwidth of the resource that can be used for data transmission totally includes X2 PRBs from a PRB 0 to a PRB X2-1.

For different subcarrier spacings, it may be specified that PRBs corresponding to the different subcarrier spacings have a same quantity of subcarriers or different quantities of subcarriers. This is not limited in the embodiments of this application. In the embodiments of this application, for a frequency domain resource, a bandwidth of a PRB of the frequency domain resource is determined based on a subcarrier spacing and a quantity of subcarriers in the PRB. For example, for a frequency domain resource, if a subcarrier spacing of the frequency domain resource is configured as 15 kHz, and one PRB has 12 subcarriers, a bandwidth of a PRB of the frequency domain resource is 180 kHz. For another example, for a frequency domain resource, if a subcarrier spacing of the frequency domain resource is configured as 60 kHz, and one PRB has 12 subcarriers, a bandwidth of a PRB of the frequency domain resource is 720 kHz.

In the embodiments of this application, first resource allocation information corresponding to a first resource allocation type (including a first uplink resource allocation type and/or a first downlink resource allocation type) (namely, a resource allocation type 0, to be specific, an uplink resource allocation type 0 and/or a downlink resource allocation type 0) may be an RBG-based resource allocation manner in which a bitmap (Bitmap) is used.

Second resource allocation information corresponding to a second resource allocation type (including a second uplink resource allocation type and/or a second downlink resource allocation type) (namely, a resource allocation type 1, further including an uplink resource allocation type 1 and/or a downlink resource allocation type 1) may be a resource allocation manner in which a frequency domain resource start point and length are used. For example, a resource allocation granularity of the resource allocation manner may be a resource block (resource block, RB) or a resource block group (resource block group, RBG).

In a possible implementation, the second resource allocation information may use a resource allocation manner that is based on a frequency domain resource start point and length that are indicated by a resource indication value (resource indication value, RIV).

In addition, for an uplink frequency domain resource, resource allocation types supported in a CP-OFDM waveform include the uplink resource allocation type 0 and the uplink resource allocation type 1, and a resource allocation type supported in a discrete fourier transform (Discrete Fourier Transform, DFT)-spread (Spread, S)-OFDM waveform includes the uplink resource allocation type 0. Therefore, in the embodiments of this application, the first resource allocation information may alternatively use the second resource allocation information corresponding to the second resource allocation type. In other words, the first resource allocation information may alternatively use the resource allocation manner that is based on a frequency domain resource start point and length.

The uplink or downlink resource allocation type 0 is an RBG-based resource allocation type in which a Bitmap is used. The resource allocation information may be used to indicate an RB or a resource block group (resource block group, RBG) allocated by a base station (for example, a gNB) to UE. The RBG has at least one RB, and a quantity of RBs in the RBG may also be referred to as a size of the RBG, an RBG size, an RBG dimension, or another name. The RB may be a physical resource block (physical resource block, PRB), or may be a virtual resource block (virtual resource block, VRB).

In the embodiments of this application, in a possible implementation of the first resource allocation type (including the first uplink resource allocation type and the first downlink resource allocation type) (namely, the resource allocation type 0, to be specific, the uplink resource allocation type 0 and the downlink resource allocation type 0), for a frequency domain resource, if a size of one RBG is $F1$ RBs, and $F1$ is an integer greater than or equal to 1, a quantity of RBGs in the frequency domain resource is $\lceil F2/F1 \rceil$, where $F2$ is a quantity of RBs included in the frequency domain resource.

It should be noted that, if $F2 \bmod F1$ is greater than 0, for the frequency domain resource, a size of $\lfloor F2/F1 \rfloor$ RBGs is $F1,$ and a size of one of the RBGs is $F2 - \lfloor F2/F1 \rfloor \times F1$.

A Y1_1-bit bitmap and Y1_2 padding bits are included in the first resource allocation type. Y1_1 is an integer greater than or equal to 1, Y1_2 is an integer greater than or equal to 0, and the padding bit may be padded with a preconfigured value. In the embodiments of this application, one information bit may also be described as one information bit. One bit in the Y1_1-bit bitmap corresponds to one RBG in the frequency domain resource, and the bit may also be referred to as an information bit. For a bit in the Y1_1-bit bitmap, when a value of the bit is t1, a resource allocated by the gNB to the UE includes an RBG corresponding to the bit; or when a value of the bit is t2 or is not t1, a resource allocated by the gNB to the UE does not include an RBG corresponding to the bit, where t1 and t2 may be integers. For example, t1 is 1. In the first type of resource allocation, any RBG in the frequency domain resource may be allocated to the UE for data transmission based on a value of each bit in the bitmap, so that flexible resource configuration can be provided for allocation of consecutive and inconsecutive resources.

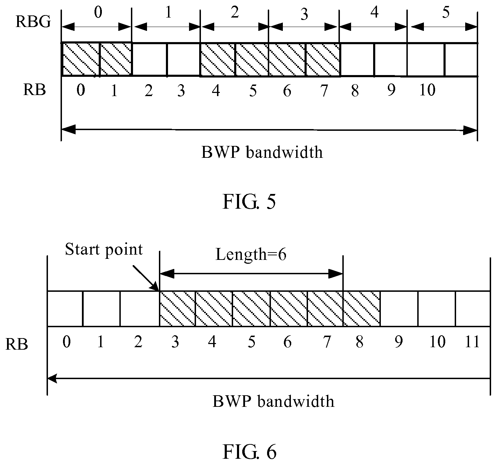

FIG. 5 is a possible schematic diagram of a first resource allocation type: A bandwidth of a BWP is 12 RBs/PRBs. Assuming that a size of one RBG is one RB, there are six RBGs in total. A 6-bit bitmap may be used to indicate a corresponding resource allocation status in the BWP. A resource allocation bitmap shown in FIG. 5 is 101100, and RBs in shadow parts indicate a frequency domain resource allocated by a base station to a terminal in a frequency domain resource shown in FIG. 5.

In a possible implementation of the second resource allocation type (including the second uplink resource allocation type and/or the second downlink resource allocation type) (namely, the resource allocation type 1, further including the uplink resource allocation type 1 and/or the downlink resource allocation type 1), in the second resource allocation type, the second resource allocation information includes a Y2_1-bit RIV and Y2_2 padding bits. Y2_1 is an integer greater than or equal to 1, and Y2_2 is an integer greater than or equal to 0. Information indicated by the RIV includes an index of a start RB or RBG that is allocated by the gNB to the UE in a frequency domain resource and a quantity of RBs or RBGs that are consecutively allocated by the gNB to the UE in the frequency domain resource.

FIG. 6 is a schematic diagram of a second resource allocation type. In FIG. 6, a bandwidth of a BWP is 12 RBs/PRBs, a start point is the fourth RB (for example, an RB 3), a length is six RBs starting from the start point RB 3, and a final bit length is:

$$\left\lceil \log_2\left(\frac{N_{RB}(N_{RB}+1)}{2}\right)\right\rceil \quad (1)$$

$N_{RB}$ indicates a quantity of RBs in the BWP. It should be noted that, the foregoing uses an example in which the start point is the fourth RB (for example, the RB 3) and the length is six RBs starting from the start point RB 3, to describe the second resource allocation information. A specific quantity of RBs may also be a quantity of RBGs. A specific calculation manner of a bitmap is as follows:

Assuming that a start point is a and a length is 1, a calculated value is:

$$\begin{cases} \text{if } (l-1) \leq \lfloor N_{RB}/2 \rfloor, \text{ the value is } N_{RB}(l-1)+a, \\ \text{otherwise, the value is } N_{RB}(N_{RB}-l+1)+(N_{RB}-1-a) \end{cases} \quad (2)$$

The length of the bitmap that is calculated by using the formula (1) is 7. According to the formula (2), the value corresponding to the bitmap is 63, 63 is converted into a binary value: 111111, and 111111 is placed on a right side of 7 bits as 0111111.

It should be noted that the foregoing shows an example. The embodiments of this application are not limited to the table and values in the foregoing method.

In this specification, the following uses an example in which a network device is a base station and a communications device is a terminal, to describe a resource scheduling method provided in the embodiments of this application and specific structures of a corresponding network device and communications device. The following describes in detail the technical solutions provided in the embodiments of this application.

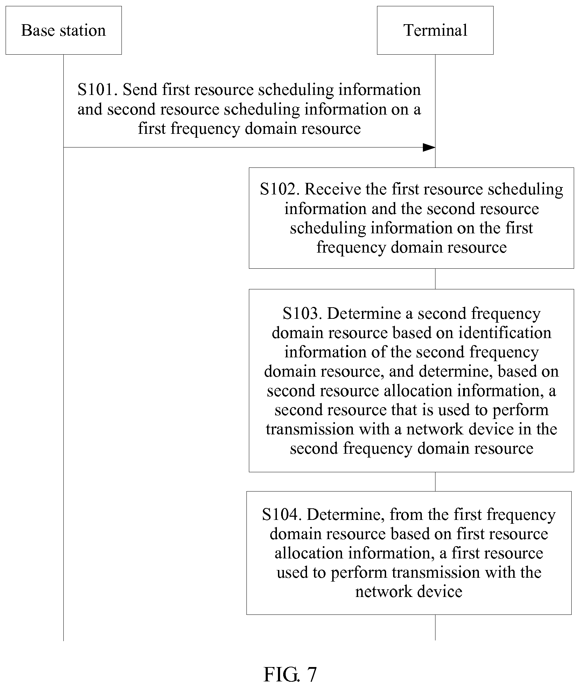

FIG. 7 is a schematic interaction diagram of a resource scheduling method according to an embodiment of this application. As shown in FIG. 7, the method includes the following steps.

S101. A base station sends first resource scheduling information and second resource scheduling information to a terminal on a first frequency domain resource, where the first resource scheduling information includes first resource allocation information, and the first resource allocation information is used to indicate a first resource in first resource allocation; and the second resource scheduling information includes second resource allocation information, and the second resource allocation information is used to indicate a second resource in a second frequency domain resource.

Optionally, the second resource allocation information in this embodiment of this application indicates a frequency domain resource start point and a frequency domain resource length.

Optionally, in an implementation of this embodiment of this application, the base station may only send the second resource scheduling information to the terminal on the first frequency domain resource, or may only send the first resource scheduling information to the terminal on the first frequency domain resource in this embodiment of this application.

In a possible implementation, the first resource scheduling information in this embodiment of this application is used to support the terminal in performing scheduling on a same BWP. For example, the base station may instruct the terminal to: adjust subsequent scheduling from a transmission resource on which the terminal currently communicates with the base station in the first frequency domain resource to a new transmission resource determined from the first frequency domain resource based on the first resource allocation information, or still perform communication based on a current transmission resource.

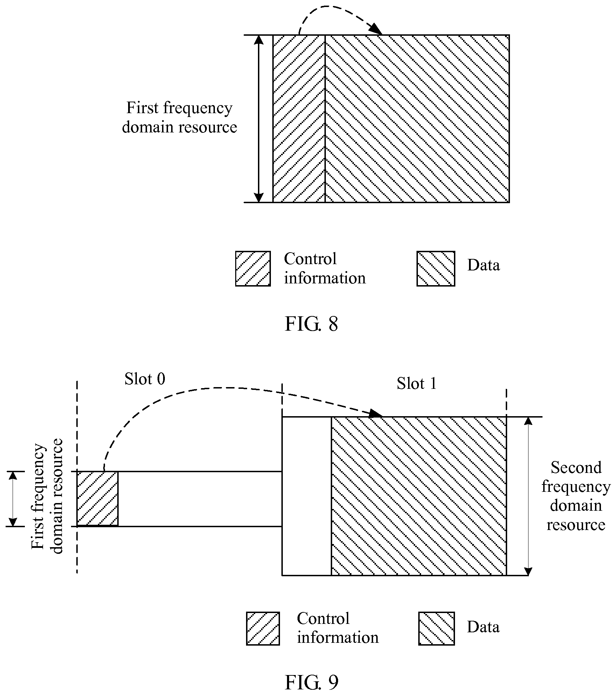

For example, as shown in FIG. 8, the base station communicates with the terminal on a transmission resource (for example, a data channel) in a first frequency domain resource. When the transmission resource cannot meet a communication requirement, the base station may send first resource scheduling information to the terminal, to instruct the terminal to adjust from the transmission resource to another transmission resource in the first frequency domain resource to communicate with the base station.

In a possible implementation, the second resource scheduling information in this embodiment of this application is used to support the terminal in performing cross-frequency-domain-resource scheduling, to be specific, instruct the terminal to switch from the first frequency domain resource to the second frequency domain resource.

Optionally, the second resource scheduling information includes identification information of the first frequency domain resource or identification information of the second frequency domain resource.

For example, as shown in FIG. 9, the base station sends second resource scheduling information to the terminal on a first frequency domain resource of a slot 0 in a current scheduling period, where the second resource scheduling information is used to indicate, to the terminal, that the base station allocates a second resource to the terminal in a second frequency domain resource of a slot1.

In a possible implementation, the second resource scheduling information in this embodiment of this application may be alternatively used to indicate information about allocation for the terminal in the first frequency domain resource. In this case, no frequency domain resource switching is required. In this case, the second resource allocation information indicates the first frequency domain resource, and does not indicate the second frequency domain resource. When the base station schedules the first frequency domain resource based on the second resource scheduling information, the second resource scheduling information may be used as a fallback of the first resource scheduling information. To be specific, when the terminal cannot correctly receive the first resource scheduling information or when a channel condition deteriorates, the base station may send the second resource scheduling information to the terminal, thereby improving information transmission reliability. In this case, identification information in the second resource scheduling information may be predefined (for example, all bit values of the identification information in the second resource scheduling information may be 0), or may be the identification information indicating the first frequency domain resource. The terminal may distinguish, based on the identification information, whether the first frequency domain resource or the second frequency domain resource is scheduled by the base station by using the second resource scheduling information.

When the base station schedules the second frequency domain resource, the second resource scheduling information may be used as scheduling information for cross-frequency-domain-resource scheduling.

Optionally, the first frequency domain resource and the second frequency domain resource in this embodiment of this application are frequency domain resources that belong to a carrier. To be specific, bandwidths of the first frequency domain resource and the second frequency domain resource are respectively lower than or equal to bandwidths of carriers to which the first frequency domain resource and the second frequency domain resource belong.

In a scenario to which this embodiment of this application may be applied, the first frequency domain resource and the second frequency domain resource may be frequency domain resources that belong to a same carrier.

For example, when a carrier 1 includes a plurality of frequency domain resources, the first frequency domain resource and the second frequency domain resource may be frequency domain resources that belong to the carrier 1. In this case, the base station may send the second resource scheduling information to the terminal, to instruct the terminal to perform cross-frequency-domain-resource scheduling on different frequency domain resources in one carrier. In addition, when the first frequency domain resource and the second frequency domain resource belong to a same carrier, the second resource scheduling information may not carry carrier indication information. In this way, when determining that the second resource scheduling information does not carry carrier indication information, the terminal can determine to perform cross-resource scheduling in a same carrier.

In another scenario to which this embodiment of this application may be applied, the first frequency domain resource and the second frequency domain resource may be alternatively frequency domain resources that belong to different carriers.

For another example, the first frequency domain resource is a frequency domain resource in a carrier 1, and the second frequency domain resource is a frequency domain resource in a carrier 2. In this case, the base station may send the second resource scheduling information to the terminal, to instruct the terminal to switch from a first frequency domain resource in a current carrier (for example, the carrier 1) to a second frequency domain resource in another carrier (for example, the carrier 2), in other words, implement frequency domain resource switching between different carriers.

In addition, when the first frequency domain resource and the second frequency domain resource belong to different carriers, the second resource scheduling information may further carry identification information of a carrier to which the second frequency domain resource belongs. The identification information of the carrier may be an index or a number of the carrier. The identification information of the carrier may be preconfigured by the terminal and the base station, or may be sent to the terminal by the base station after the identification information of the carrier is configured by the base station. This is not limited in this embodiment of this application.

Optionally, the first resource scheduling information and the second resource scheduling information in this embodiment of this application may be DCI. The DCI is information carried in a physical downlink control channel (Physical Downlink Control Channel, PDCCH).

The PDCCH is mainly used by the base station to: (1) send downlink resource scheduling information to the terminal, so that the terminal receives a downlink shared physical channel (physical downlink shared channel, PDSCH); (2) send uplink resource scheduling information to the terminal, so that the terminal sends a physical uplink shared channel (physical uplink shared channel, PUSCH); (3) send an aperiodic channel quality indicator (channel quality indicator, CQI) report request; and so on. DCI in different formats has different functions. For example, a format of uplink DCI is different from a format of downlink DCI. For example, DCI is in different formats in different transmission modes.

In this embodiment of this application, the first resource scheduling information is predefined as DCI in a first format, where the DCI in the first format may also be referred to as DCI in a normal format (Normal Format). In this embodiment of this application, the second resource scheduling information is predefined as DCI in a second format, where the DCI in the second format may also be referred to as DCI in a fallback format (fallback format), or may also be referred to as DCI in a compact format (compact format).

An example of a type of DCI in the fallback format is as follows: The DCI in the fallback format is used for switching between different transmission modes. For example, for downlink transmission, when a closed-loop spatial multiplexing mode Mode 4 is supported, the UE needs to blindly detect two DCI formats: a DCI format 1A and a DCI format 2, where the DCI 1A uses a transmit diversity mode. This is done in consideration of the following: The transmission mode is semi-statically configured, but a channel dynamically changes at any time; and when a channel condition is relatively good, the base station performs sending in a closed-loop space division multiplexing manner; or when a channel condition is not very good, the base station may send information to the UE by using the DCI 1A, where a transmit diversity or single-port transmission mode is used, and the two transmission manners are more reliable than the closed-loop space division multiplexing manner.

In a possible implementation, the first resource scheduling information and the second resource scheduling information meet at least one of the following conditions:

a size of the first resource scheduling information is different from a size of the second resource scheduling information; and a format of the first resource scheduling information is different from a format of the second resource scheduling information.

That a size of the first resource scheduling information is different from a size of the second resource scheduling information means that the first resource scheduling information and the second resource scheduling information include different quantities of bits.

That a format of the first resource scheduling information is different from a format of the second resource scheduling information means that the first resource scheduling information and the second resource scheduling information correspond to different formats.

Optionally, when the size of the first resource scheduling information is different from the size of the second resource scheduling information, the format of the first resource scheduling information is also different from the format of the second resource scheduling information.

Optionally, when the format of the first resource scheduling information is different from the format of the second resource scheduling information, the size of the first resource scheduling information may be the same as or may be different from the size of the second resource scheduling information. This is not limited in this embodiment of this application.

In order that the size of the first resource scheduling information is the same as the size of the second resource scheduling information, one piece of resource scheduling information that has a larger quantity of bits in the first resource scheduling information and the second resource scheduling information may be used as a reference, to pad 0 in resource scheduling information in the other format. Maintaining resource scheduling information in different formats in a same size helps reduce blind detection complexity of the terminal. In this case, the two types of resource scheduling information in different formats need to include identification information, so that the terminal distinguishes between the first resource scheduling information and the second resource scheduling information based on the identification information. For example, information of 1 bit may be carried for identification. When the bit is 0, the information identifies the first resource scheduling information; or when the bit is 1, the information identifies the second resource scheduling information.

Therefore, if the two pieces of resource scheduling information are in different sizes, the terminal may determine, based on the size of the first resource scheduling information and the size of the second resource scheduling information, whether resource scheduling information received at a current moment is DCI in the first format or DCI in the second format.

If the two pieces of resource scheduling information are in a same size, the terminal may determine, based on identification information in each piece of resource scheduling information, whether resource scheduling information received at a current moment is DCI in the first format or DCI in the second format.

Optionally, the first resource scheduling information meets at least one of the following conditions: the first resource scheduling information corresponds to different sizes in different transmission manners; and the first resource scheduling information corresponds to different formats in different transmission manners.

The transmission manners are different multi-antenna transmission solutions used when the base station communicates with the terminal. Generally, different objectives may be achieved by using multi-antenna transmission at a transmitter and/or a receiver in different manners:

(1) A plurality of antennas may be used at the transmitter and/or the receiver to provide an additional diversity to resist radio channel fading ("transmit diversity", transmit diversity). In this case, channels experienced by different antennas should have low cross-correlation. This means that a spacing between the antennas needs to be large enough (spatial diversity, spatial diversity); or different antenna polarization directions need to be used (polarization diversity, polarization diversity). The transmit diversity is mainly used to alleviate channel fading.

(2) A plurality of antennas may be used at the transmitter and/or the receiver in a specific manner to "form" a complete beam. For example, an overall antenna gain in a direction of a target receiver/transmitter may be maximized, or a specific primary interference signal may be suppressed. This type of "beamforming (beamforming)" may be implemented based on high or low fading correlation between antennas. The beamforming is mainly used to improve cell coverage (coverage).

(3) A plurality of antennas may be simultaneously used at the transmitter and the receiver to establish a plurality of parallel transmission channels. This can provide very high bandwidth utilization without reducing related power effectiveness. In other words, this can provide a very high data rate on a limited bandwidth without reducing coverage on a large scale. This is usually referred to as "spatial multiplexing (spatial multiplexing)", and sometimes is also referred to as MIMO (Multi-Input Multi-Output). The spatial multiplexing is mainly used to improve a data transmission rate, and means that data is divided into a plurality of streams and these streams are simultaneously sent.

Different multi-antenna transmission solutions correspond to different transmission manners (Transmission Mode, TM mode for short). For example, in LTE, nine TM modes can be supported. The nine TM modes correspond to different special antenna mapping structures and different reference signals (a cell-specific reference signal or a UE-specific reference signal) used during demodulation, and depend on different CSI feedback types.

For example, a size of the first resource scheduling information in a transmission manner A is N bits, and a size of the first resource scheduling information in a transmission manner B is M bits, where M and N are different integers greater than or equal to 1.

For example, when the first resource scheduling information is transmitted in the transmission manner A, a format corresponding to the first resource scheduling information is the first format; and when the first resource scheduling information is transmitted in the transmission manner B, a format corresponding to the first resource scheduling information is the second format.

A possible example is shown in the following Table 1:

Table 1 Correspondence between a transmission manner and a DCI format

| Transmission manner | DCI format |
|---|---|
| TM 2 | DCI format 1A |
|  | DCI format 1 |
| TM 3 | DCI format 1A |
|  | DCI format 2A |
| TM 4 | DCI format 1A |
|  | DCI format 2 |

(continued)

| Transmission manner | DCI format |
|---|---|
| TM 5 | DCI format 1A |
| | DCI format 1D |
| TM 6 | DCI format 1A |
| | DCI format 1B |

Each transmission manner corresponds to DCI in two formats, and the DCI 1A is the format of the second resource scheduling information in this embodiment of this application. All DCI formats in Table 1 except the DCI 1A may be used as DCI formats of the first resource scheduling information described in this embodiment of this application, and different transmission manners correspond to different first resource scheduling information.

Optionally, in this embodiment of this application, a transmission manner corresponding to the second resource scheduling information is a transmit diversity manner or a single-port manner.

The transmit diversity manner means that a plurality of antennas may be used at a transmitter to provide an additional diversity to resist radio channel fading. This can improve transmission reliability. The single-port manner also has high robustness. In this embodiment of this application, the second resource scheduling information uses the transmit diversity manner or the single-port manner. This can improve reliability of indication information during cross-frequency-domain-resource scheduling, thereby improving a switching success rate. In addition, as a type of DCI in the fallback format, the second resource scheduling information also provides an alternative manner for transmitting the first resource scheduling information.

Optionally, based on local frequency domain resource scheduling, the first resource scheduling information in this embodiment of this application does not need to include frequency domain resource identification information. For example, the first resource scheduling information does not include the identification information of the first frequency domain resource, because it is considered that the second resource scheduling information needs to be used to support cross-frequency-domain-resource scheduling.

In a conventional technical solution, cross-frequency-domain-resource scheduling may be implemented by using first resource scheduling information. The conventional first resource scheduling information usually needs to include frequency domain resource identification information, and for the first resource scheduling information, the first resource allocation type is usually used for frequency domain resource allocation. In this case, a quantity of bits occupied by resource scheduling information carried in DCI is usually determined based on a size of a frequency domain resource (as shown in Table 2, for example, the frequency domain resource is a BWP). Table 2 provides a method for indicating resource allocation by using scheduling information corresponding to the first resource allocation type. Resource allocation information of a same size is usually used for cross-frequency-domain-resource scheduling and local frequency domain resource scheduling. The following Table 2 is used as an example. In a condition of a subcarrier spacing of 15 kHz, a possible maximum quantity of resource allocation bits is usually used as a size of resource allocation information. Herein, according to the last column of Table 2, in the first resource allocation type, a maximum quantity of resource allocation bits is usually used as a size of resource allocation information corresponding to the first resource allocation type, for example, a maximum value shown in Table 2 is 35 bits.

Table 2 Relationship between a size of a BWP and a quantity of bits actually occupied by the BWP

| BWP size (quantity of RBs) | RBG size (quantity of RBs) | Quantity of actually occupied bits |
|---|---|---|
| 28 | 2 | 14 |
| 55 | 2 | 28 |
| 110 | 4 | 28 |
| 165 | 8 | 21 |
| 220 | 8 | 28 |
| 275 | 8 | 35 |

However, in an actual process, dynamic switching can be performed between BWPs, in other words, switching from a BWP to another BWP is performed. A typical scenario is the bandwidth fallback scenario described above. As shown in FIG. 9, the base station may send the second resource scheduling information to the terminal in a control information area of the first frequency domain resource of the slot 0. In this case, the first frequency domain resource is a BWP with a relatively low bandwidth. For example, as shown in the foregoing Table 2, the BWP with the relatively low bandwidth may include 28 RBs. In this case, a size of bits actually occupied by the BWP in a resource allocated to the terminal by the base station is 14 bits. When the terminal needs to switch from the first frequency domain resource to the second frequency domain resource, a bandwidth of the second frequency domain resource is higher than a bandwidth of the first frequency domain resource. For example, a BWP corresponding to the second frequency domain resource may include 275 RBs. In this case, because the size of the resource allocation information corresponding to the first resource allocation type is 35 bits, in the conventional technical solution, when the first resource scheduling information is used to schedule the first frequency domain resource, information of 34-14=20 bits needs to be padded in the first resource scheduling information. This causes a great waste of resources.

In conclusion, in this embodiment of this application, the first resource scheduling information is not used for frequency domain resource switching, and does not need to include the corresponding frequency domain resource identification information. In this embodiment of this application, the second resource scheduling information is used for frequency domain resource switching. Considering that the second resource scheduling information is a type of DCI in the fallback format, the second resource allocation type is usually used for resource allocation. Compared with the first resource allocation type, in a case of a relatively high bandwidth, the second resource allocation type is characterized by a smaller quantity of required resource allocation bits, so that a quantity of padding bits can be reduced, thereby alleviating a waste of resources.

Specifically, in step S101, the base station may send the first resource scheduling information and the second resource scheduling information to the terminal in a control information area (for example, a physical downlink control channel (physical downlink control channel, PDCCH) or a control resource set (Control Resource Set, CORESET)) of the first frequency domain resource. For details, refer to FIG. 9.

It may be understood that, in this embodiment of this application, when the base station instructs, by using the second resource scheduling information, the terminal to switch from the first frequency domain resource to the second frequency domain resource, the second resource scheduling information may be DCI in the second format.

In this embodiment of this application, resource allocation information corresponding to the first resource allocation type (which may be a first uplink resource allocation type and/or a first downlink resource allocation type) (namely, a resource allocation type 0, to be specific, an uplink resource allocation type 0 and/or a downlink resource allocation type 0) may be an RBG-based resource allocation manner in which a Bitmap is used.

Resource allocation information corresponding to the second resource allocation type (including a second uplink resource allocation type and a second downlink resource allocation type) (namely, a resource allocation type 1, which may be an uplink resource allocation type 1 and/or a downlink resource allocation type 1) may be a resource allocation manner that is based on a frequency domain resource start point and length that are indicated by a RIV, where a resource allocation granularity of the resource allocation manner is a resource block (resource block, RB) or a resource block group (resource block group, RBG). For an uplink frequency domain resource, resource allocation types supported in a CP-OFDM waveform include the uplink resource allocation type 0 and the uplink resource allocation type 1, and a resource allocation type supported in a DFT-S-OFDM waveform includes the uplink resource allocation type 0.

The uplink or downlink resource allocation type 0 is an RBG-based resource allocation type in which a bitmap is used. The resource allocation information may be used to indicate an RB or a resource block group (resource block group, RBG) allocated by a base station (for example, a gNB) to UE. The RBG has at least one RB, and a quantity of RBs in the RBG may also be referred to as a size of the RBG, an RBG size, an RBG dimension, or another name. The RB may be a physical resource block (physical resource block, PRB), or may be a virtual resource block (virtual resource block, VRB).

In a frequency domain resource that can be used for data transmission, one PRB corresponds to one virtual resource block (Virtual Resource Block, VRB). The VRB may include a centralized VRB or a distributed VRB. The centralized VRB is directly mapped to the PRB. This may be alternatively described as follows: An index of a PRB corresponding to a VRB with an index $n_{VRB}$ is $n_{PRB}$, where $n_{PRB} = n_{VRB}$. The distributed VRB is mapped to the PRB according to a specific rule. For example, the mapping method may be a mapping method in an LTE standard protocol.

In this embodiment of this application, in a possible implementation of the first resource allocation type (including the first uplink resource allocation type and the first downlink resource allocation type) (namely, the resource allocation type 0, to be specific, the uplink resource allocation type 0 and the downlink resource allocation type 0), for a frequency domain resource, if a size of one RBG is $F1$ RBs, and $F1$ is an integer greater than or equal to 1, a quantity of RBGs in the frequency domain resource is $\lceil F2/F1 \rceil$, where $F2$ is a quantity of RBs included in the frequency domain resource.

It should be noted that, if $F2 \bmod F1$ is greater than 0, for the frequency domain resource, a size of $\lfloor F2/F1 \rfloor$ RBGs is $F1$, and a size of one of the RBGs is $F2 - \lfloor F2/F1 \rfloor \times F1$.

A Y1_1-bit bitmap and Y1_2 padding bits are included in the resource allocation type. Y1_1 is an integer greater than or equal to 1, Y1_2 is an integer greater than or equal to 0, and the padding bit may be padded with a preconfigured value. In this embodiment of this application, one information bit may also be described as one information bit. One bit in the Y1_1-bit bitmap corresponds to one RBG in the frequency domain resource, and the bit may also be referred to as an information bit. For a bit in the Y1_1-bit bitmap, when a value of the bit is t1, a resource allocated by the gNB to the terminal includes an RBG corresponding to the bit; or when a value of the bit is t2 or is not t1, a resource allocated by the gNB to the UE does not include an RBG corresponding to the bit, where t1 and t2 may be integers. For example, t1 is 1. In the first type of resource allocation, any RBG in the frequency domain resource may be allocated to the UE for data transmission based on a value of each bit in the bitmap, so that flexible resource configuration can be provided for allocation of consecutive and inconsecutive resources.

In a possible implementation of the second resource allocation type (including the second uplink resource allocation type and the second downlink resource allocation type) (namely, the resource allocation type 1, further including the uplink resource allocation type 1 and the downlink resource allocation type 1), in the resource allocation type, a resource allocation field includes a Y2_1-bit resource indication value (resource indication value, RIV) and Y2_2 padding bits. Y2_1 is an integer greater than or equal to 1, and Y2_2 is an integer greater than or equal to 0. Information indicated by the RIV includes an index of a start RB or RBGG that is allocated by the gNB to the UE in a frequency domain resource and a quantity of RBs or RBGs that are consecutively allocated by the gNB to the UE in the frequency domain resource.

S102. The terminal receives, on the first frequency domain resource, the first resource scheduling information and the second resource scheduling information that are sent by the base station.

It may be understood that the first frequency domain resource is one or more frequency domain resources for communication between the base station and the terminal in a current scheduling period.

When the first resource scheduling information and the second resource scheduling information are DCI, the terminal may determine, through blind detection, whether the first resource scheduling information is received on the first frequency domain resource, or the second resource scheduling information is received on the first frequency domain resource, or both the first resource scheduling information and the second resource scheduling information are received on the first frequency domain resource.

An example of the blind detection is as follows: When the DCI is transmitted between the base station and the terminal by using a PDCCH, the base station configures search space of the PDCCH for the terminal. The search space of the PDCCH may also be referred to as candidate resource locations of the PDCCH or PDCCH candidate resource locations, the PDCCH candidate resource locations include N resource locations that may be used to transmit the PDCCH, and N is an integer greater than or equal to 1. The base station may select one resource location from the PDCCH candidate resource locations. For example, the base station selects one resource location from the candidate resource locations based on channel quality, and sends a PDCCH to the terminal at the selected resource location. The UE monitors the search space of the PDCCH, and detects the PDCCH in the search space, to be specific, detects the PDCCH at the PDCCH candidate resource locations. Before receiving a PDCCH, the UE does not know a specific resource location that is in the N resource locations and at which the gNB sends the PDCCH or does not know whether the gNB sends the PDCCH to the UE, and the UE considers that the gNB may send the PDCCH at any of the N resource locations. Therefore, the UE detects the PDCCH at the N resource locations. To detect one PDCCH, the UE detects the PDCCH at least once and detects the PDCCH at a maximum of N times.

In this embodiment of this application, the terminal does not know whether the first resource scheduling information is sent by the base station on the first frequency domain resource, or the second resource scheduling information is sent by the base station on the first frequency domain resource, or both the first resource scheduling information and the second resource scheduling information are sent by the base station on the first frequency domain resource. Therefore, the terminal can determine specific resource scheduling information only through blind detection.

Certainly, the base station may configure, for the terminal, whether the first resource scheduling information and the second resource scheduling information need to be blindly detected. In a possible implementation, this is implemented by configuring a corresponding transmission mode. In this case, the second resource scheduling information has a fallback function, and is used to schedule the first frequency domain resource.

In this case, the second resource scheduling information may not include frequency domain resource identification information, or may include the identification information of the first frequency domain resource. Alternatively, when carrying a specific type of information, the second resource scheduling information is enabled, in a predefined manner, to instruct to schedule the first frequency domain resource.

If the base station configures a corresponding transmission mode for the terminal, the terminal needs to detect a DCI format in the corresponding transmission mode.

If the base station sends, to the terminal, information indicating that dynamic frequency domain resource switching is supported, to be specific, configures a bandwidth-adaptive mode for the terminal; or the base station configures a plurality of BWPs for the terminal, to be specific, supports dynamic frequency domain resource switching, the terminal needs to detect the first resource scheduling information and the second resource scheduling information, and the second resource scheduling information needs to include frequency domain resource identification information, to indicate the second frequency domain resource.

In a possible implementation, the terminal determines, based on information indicating whether dynamic frequency domain resource switching is supported, whether the second frequency domain resource scheduling information includes frequency domain resource identification information. Only when the indication information is received, the corresponding identification information exists, and is used to indicate an identifier of the second frequency domain resource. When the indication information is not received, as the fallback format of the first resource scheduling information, the corresponding second resource scheduling information may not carry the indication information.

S103. The terminal determines the second frequency domain resource based on identification information of the second frequency domain resource, and determines, based on the second resource allocation information, the second resource that is used to communicate with the network device in the second frequency domain resource.

For example, as shown in FIG. 6, the second frequency domain resource allocated by the terminal to the base station includes 12 RBs, for example, an RB 0 to an RB 11 shown in FIG. 6. The second resource allocation information corresponding to the second resource allocation type uses RIV-based indication. Specifically, the second resource allocation information includes that a resource block start point is the RB 3 and a resource block length is 6. In this case, after receiving the second resource scheduling information, the terminal may determine that the RB 3 to the RB 8 in the second frequency domain resource are used to transmit data with the base station (for example, the terminal may send data to the base station on the RB 3 to the RB 6, or receive, on the RB 3 to the RB 6, data sent by the base station).

Optionally, when the second resource allocation information uses an indication manner that is based on a resource start point and a resource length, the terminal determines the second resource from the second frequency domain resource based on the resource start point and the resource length.

S104. The terminal determines, based on the first resource allocation information, the first resource that is used to communicate with the base station in the first frequency domain resource.

For example, as shown in FIG. 5, transmission resources allocated by the base station to the terminal before sending the first resource scheduling information are an RGB 0, an RGB 2, and an RGB 3, and the base station and the terminal perform scheduling on the RGB 0 in a current period. In this case, after the terminal receives the first resource allocation information, if a transmission resource indicated by the first resource allocation information is the RGB 2, the terminal may adjust from the RGB 0 to the RGB 2 to perform transmission with the base station.

Optionally, in a possible implementation, in this embodiment of this application, before step S101, the method further includes: selecting, by the base station, the second frequency domain resource from a plurality of frequency domain resources.

It may be understood that, in this embodiment of this application, before the base station performs S101, the base station has configured the plurality of frequency domain resources for the terminal. Specifically, the base station may configure the plurality of frequency domain resources for the terminal from a system frequency resource, and the plurality of frequency domain resources are frequency domain resources in a carrier. The plurality of frequency domain resources may be frequency domain resources that belong to a same carrier, or may be frequency domain resources in different carriers. When the plurality of frequency domain resources belong to a same carrier, a bandwidth of each frequency domain resource is lower than a bandwidth of the carrier to which the plurality of frequency domain resources belong. When the plurality of frequency domain resources belong to different carriers, a bandwidth of each frequency domain resource is lower than or equal to a bandwidth of a carrier to which the frequency domain resource belongs.

This is not limited in this embodiment of this application. All the frequency domain resources may overlap or may not overlap in frequency domain. This is not limited in this embodiment of this application.

Optionally, in a frequency domain resource that can be used for data transmission, one PRB corresponds to one virtual resource block (Virtual Resource Block, VRB). The VRB may include a centralized VRB or a distributed VRB. The centralized VRB is directly mapped to the PRB. This may be alternatively described as follows: An index of a PRB corresponding to a VRB with an index $n_{VRB}$ is $n_{PRB}$, where $n_{PRB} = n_{VRB}$. The distributed VRB is mapped to the PRB according to a specific rule. For example, the mapping method may be a mapping method in an LTE standard protocol.

In the second resource allocation type, allocated resources are consecutive in frequency domain. To improve transmission reliability, the resources may be considered to be distributed to an entire frequency domain bandwidth, in other words, VRB-to-PRB mapping may be supported.

In this embodiment of this application, a VRB-to-PRB mapping manner is divided into two steps:

Step 1: Interleaving (interleaving): Map consecutive VRB pairs to inconsecutive PRB pairs.
Step 2: Inter-slot frequency hopping of a same VRB number.

For step 1, a quantity of all VRBs that can be used for distributed mapping in a system bandwidth is calculated according to the following formulas:

$$N_{\mathrm{VRB}}^{\mathrm{DL}} = N_{\mathrm{VRB,gap1}}^{\mathrm{DL}} = 2 \cdot \min(N_{\mathrm{gap}}, N_{\mathrm{RB}}^{\mathrm{DL}} - N_{\mathrm{gap}}) \quad \text{if} \quad N_{\mathrm{gap}} = N_{\mathrm{gap},1};$$

and

$$N_{\mathrm{VRB}}^{\mathrm{DL}} = N_{\mathrm{VRB,gap2}}^{\mathrm{DL}} = \left\lfloor N_{\mathrm{RB}}^{\mathrm{DL}} / 2N_{\mathrm{gap}} \right\rfloor \cdot 2N_{\mathrm{gap}} \quad \text{if} \quad N_{\mathrm{gap}} = N_{\mathrm{gap,2}}.$$

$N_{\mathrm{gap,1}}$ and $N_{\mathrm{gap,2}}$ are determined based on a BWP bandwidth, and a possible correspondence between $N_{\mathrm{gap,1}}$ or $N_{\mathrm{gap,2}}$ and the BWP bandwidth is shown in the following Table 3:

Table 3 Correspondence between $N_{\mathrm{gap,1}}$ or $N_{\mathrm{gap,2}}$ and the BWP bandwidth

| BWP bandwidth ( $N_{\mathrm{RB}}^{\mathrm{DL}}$ ) | Gap ($N_{\mathrm{gap}}$) | |
| --- | --- | --- |
| | 1st Gap ($N_{\mathrm{gap,1}}$) | 2nd Gap ($N_{\mathrm{gap,2}}$) |
| 6-10 | $\left\lceil N_{\mathrm{RB}}^{\mathrm{DL}} / 2 \right\rceil$ | N/A |
| 11 | 4 | N/A |
| 12-19 | 8 | N/A |
| 20-26 | 12 | N/A |
| 27-44 | 18 | N/A |
| 45-49 | 27 | N/A |
| 50-63 | 27 | 9 |
| 64-79 | 32 | 16 |
| 80-110 | 48 | 16 |

In step 1, the base station may indicate $N_{\mathrm{gap}} = N_{\mathrm{gap,1}}$ or $N_{\mathrm{gap}} = N_{\mathrm{gap,2}}$ to the terminal by using signaling. When a quantity of VRBs that can be used for interleaving may be less than the total quantity of VRBs, interleaving is performed for VRBs that can be used for interleaving.

After determining VRBs that can be used for interleaving, the VRBs that can be used for interleaving are divided into one or more interleaving units. Specifically, $\widetilde{N}_{\mathrm{VRB}}^{\mathrm{DL}} = N_{\mathrm{VRB}}^{\mathrm{DL}}$ when $N_{\mathrm{gap}} = N_{\mathrm{gap,1}}$, or $\widetilde{N}_{\mathrm{VRB}}^{\mathrm{DL}} = 2N_{\mathrm{gap}}$ = when $N_{\mathrm{gap}} = N_{\mathrm{gap,2}}$.

Numbers of VRBs in one interleaving unit are written to an interleaving matrix row by row, where the interleaving matrix has four columns and $N_{\mathrm{row}} = \left\lceil \widetilde{N}_{\mathrm{VRB}}^{\mathrm{DL}} / (4P) \right\rceil P$ rows, where $P$ is an RBG size. If the matrix cannot be padded entirely, null (null) elements are padded in the matrix. The null elements are located in the second columns and the fourth columns of the last $N_{\mathrm{null}}/2$ rows. A quantity of elements padded with null is $N_{\mathrm{null}} = 4N_{\mathrm{row}} - \widetilde{N}_{\mathrm{VRB}}^{\mathrm{DL}}$. Subsequently, VRB numbers are read column by column, and the null elements are ignored, to obtain a VRB sequence existing after the interleaving. A sequence number of a VRB sequence obtained after the interleaving corresponds to a PRB number, to be specific, a PRB corresponding to a j$^{\mathrm{th}}$ VRB (VRB k) is a PRB j.

The inter-slot frequency hopping in step 2 means that one VRB is mapped to slots of different PRBs between two slots. A PRB of an even-numbered slot (slot 0) is a PRB obtained in step 1, and a PRB corresponding to an odd-numbered slot (slot 1) is a PRB corresponding to a number obtained by offsetting a number of the PBR obtained in step 1 by $\widetilde{N}_{\mathrm{VRB}}^{\mathrm{DL}} / 2$ in a VRB interleaving unit.

Although consecutive VRBs are determined in the resource allocation type 2, during distributed mapping, the consecutive VRBs are mapped to inconsecutive PRBs. Therefore, PRB resources allocated to the terminal are inconsecutive.

Optionally, the base station may configure the plurality of frequency domain resources for the terminal by adding configuration information of the plurality of frequency domain resources. The configuration information may be configured by using signaling. The signaling may be higher layer signaling, for example, radio resource control (Radio Resource Control, RRC) signaling, a media access control (Media Access Control, MAC)-control element (Control Element, CE), or downlink control information (Downlink Control Information, DCI). This is not limited in this embodiment of this application. Certainly, the configuration information may be alternatively predefined.

Optionally, when the base station performs step S101, the base station may select, as the second frequency domain resource, at least one frequency domain resource from the plurality of frequency domain resources configured for the terminal. In this way, the base station can communicate with the terminal on two or more frequency domain resources.

For example, the base station configures six frequency domain resources for the terminal, for example, a frequency domain resource 0, a frequency domain resource 1, a frequency domain resource 2, a frequency domain resource 3, a frequency domain resource 4, and a frequency domain resource 5. In this case, the terminal may select the frequency domain resource 0 from the six frequency domain resources as the second frequency domain resource; or the terminal may select the frequency domain resource 1 and the frequency domain resource 2 from the six frequency domain resources as the second frequency domain resource; or the terminal may select the frequency domain resource 0, the frequency domain resource 1, and the frequency domain resource 2 from the six frequency domain resources as the second frequency domain resource. This is not limited in this embodiment of this application. Specifically, the base station may determine, based on channel quality fed back by the terminal or according to another standard, whether to select one frequency domain resource or select a plurality of frequency domain resources. This is not limited in this embodiment of this application.

For example, when the base station selects the second frequency domain resource based on the channel quality fed back by the terminal, the base station may select a second frequency domain resource with good channel quality for the terminal.

In this embodiment of this application, the identification information of the second frequency domain resource is used to identify the second frequency domain resource. The identification information of the second frequency domain resource may be an index (index) of the second frequency domain resource or a location of the second frequency domain resource. The following uses an example in which the identification information of the second frequency domain resource is the index of the second frequency domain resource, to describe allocating, by the base station, the identification information of the second frequency domain resource.

In a possible implementation, in this embodiment of this application, before step S101, the method further includes: allocating, by the base station, identification information to each of the plurality of frequency domain resources configured for the terminal.

In this embodiment of this application, the identification information allocated by the base station to each of the plurality of frequency domain resources configured for the terminal may be sent to the terminal when the base station configures the plurality of frequency domain resources for the terminal, or may be sent to the terminal in a process in which the base station sends the first resource scheduling information and the second resource scheduling information to the terminal (namely, a process in which the base station performs the foregoing step S101), or may be sent to the terminal in another manner such as a predefined manner. This is not limited in this embodiment of this application.

In a possible implementation, in this embodiment of this application, the base station may allocate, in the following manner, the identification information to each of the plurality of frequency domain resources configured for the terminal:

Manner 1: The base station allocates one first identifier to each of the plurality of frequency domain resources configured for the terminal.

For example, the base station may use a number of each frequency domain resource as the first identifier of each frequency domain resource, and the number of each frequency domain resource may be associated with a quantity of frequency domain resources configured by the base station for the terminal.

For example, the base station configures four frequency domain resources (for example, a frequency domain resource 0, a frequency domain resource 1, a frequency domain resource 2, and a frequency domain resource 3) for the terminal, and the base station identifies the frequency domain resource by using 2 bits. For example, the base station may identify the frequency domain resource 0 by using 00, the base station may identify the frequency domain resource 1 by using 01, the base station may identify the frequency domain resource 2 by using 10, and the base station may identify the frequency domain resource 3 by using 11. In this way, assuming that the base station sends resource scheduling information to the terminal on the frequency domain resource 0, and identification information carried in the resource scheduling information is 01 or an identification field of the resource scheduling information is 01, it indicates that the terminal needs to switch from the frequency domain resource 0 to the frequency domain resource 1.

In another possible implementation, a frequency domain resource usually configured by the base station for the terminal includes an uplink frequency domain resource and a downlink frequency domain resource. Therefore, in this embodiment of this application, the base station may allocate, in the following manner, the identification information to each of the plurality of frequency domain resources configured for the terminal:

Manner 2: The base station may allocate a second identifier to an uplink frequency domain resource and a downlink frequency domain resource in one frequency domain resource. In this way, when receiving the second identifier, the terminal can implement not only uplink frequency domain resource switching but also downlink frequency domain resource switching.

In a specific implementation process, the base station configures or predefines an association relationship between a downlink (Down Link, DL) frequency domain resource and an uplink (Up Link, UL) frequency domain resource, where each DL frequency domain resource corresponds to one UL frequency domain resource, and each association relationship is associated with one second identifier.

For example, the second identifier may be a number for pairing each DL frequency domain resource and a UL frequency domain resource, for example, 00-{DL frequency domain resource 0, UL frequency domain resource 0}, 01-{DL frequency domain resource 1, UL frequency domain resource 1}, 10-{DL frequency domain resource 2, UL frequency domain resource 2}, and 11-{DL frequency domain resource 3, UL frequency domain resource 3}.

In a possible implementation, in this embodiment of this application, the base station may further determine the association relationship between an uplink frequency domain resource and a downlink frequency domain resource in the following manner:

The base station may associate or use, as a frequency domain resource pair, an uplink frequency domain resource and a downlink frequency domain resource whose center frequency points are consistent. In this way, after receiving the second identifier from the second resource scheduling information, the terminal may directly switch from the first frequency domain resource to the second uplink frequency domain resource and the second downlink frequency domain resource, and therefore the terminal does not need to adjust a frequency point of the second uplink frequency domain resource and a frequency point of the second downlink frequency domain resource after switching to the second uplink frequency domain resource and the second downlink frequency domain resource.

The method provided in this embodiment of this application may be applied to the following scenario, to be specific, a scenario in which the base station configures only two frequency domain resources for the terminal:

For example, the base station configures a frequency domain resource 0 and a frequency domain resource 1 for the terminal. Therefore, in this embodiment of this application, alternatively, the second resource scheduling information may be used in the following manner to instruct the terminal to switch from the first frequency domain resource to the second frequency domain resource.

In a resource scheduling process, the base station may add an indication of 1 bit to the second resource scheduling information, and when the bit is a first indicator, the second resource scheduling information instructs the terminal to switch from a frequency domain resource (for example, the frequency domain resource 0) in which the terminal is currently located to another frequency domain resource (the frequency domain resource 1).

Optionally, the first indicator in this embodiment of this application may be 0 or 1. This is not limited in this embodiment of this application.

When the bit is a second indicator, the bit may be carried in the first resource scheduling information. In this way, when determining that there is the second indicator in the first resource scheduling information, the terminal determines to transmit data with (for example, send data to or receive data from) the base station in a frequency domain resource (the frequency domain resource 0) in which the terminal is currently located. This is done because when the base station configures only the two frequency domain resources for the terminal, the base station needs to transmit data with the terminal by using one (for example, the frequency domain resource 0) of the two frequency domain resources. In this case, the terminal also determines to receive, on the frequency domain resource 0, resource scheduling information sent by the base station. Therefore, when receiving, on the frequency domain resource 0, the resource scheduling information sent by the base station, the base station may determine, based on a 1-bit indication carried in the resource scheduling information, whether to switch from the frequency domain resource 0 to the frequency domain resource 1 and communicate with the base station by using a frequency domain resource determined based on second resource allocation information in the frequency domain resource 1, or transmit data with the base station by using a frequency domain resource determined based on first resource allocation information in the frequency domain resource 0.

In another possible implementation, the second resource scheduling information jointly instructs, by using the identification information of the second frequency domain resource and carrier identification information, to switch from the first frequency domain resource to the second frequency domain resource, where the carrier identification information is configured by the base station for the terminal.

Specifically, the carrier identification information is used to identify a carrier.

It should be noted that, in an actual process, on one hand, the first frequency domain resource and the second frequency domain resource may be frequency domain resources in a same carrier, and therefore switching from the first frequency domain resource to the second frequency domain resource is implemented in one carrier. On the other hand, the first frequency domain resource and the second frequency domain resource may be frequency domain resources in different carriers, for example, the first frequency domain resource is a frequency domain resource in a carrier 1 and the second frequency domain resource is a frequency domain resource in a carrier 2, and therefore switching from the first frequency domain resource to the second frequency domain resource needs to be implemented in two carriers. Therefore, in the actual process, the base station may use the resource scheduling information to jointly instruct, by using the identification information of the second frequency domain resource and the carrier identification information, to switch from the first frequency domain resource to the second frequency domain resource. In this way, the base station may not only indicate, to the terminal, an identifier of a frequency domain resource (for example, the second frequency domain resource) to which the terminal needs to switch, but also indicate, to the terminal, an identifier of a carrier to which the frequency domain resource to which the terminal needs to switch belongs.

In a possible implementation, in this embodiment of this application, the first frequency domain resource corresponds to the first resource allocation type, and the first resource allocation type is different from the second resource allocation type. For example, the first resource allocation type may be a TPYE 0, and the second resource allocation type may be a TYPE 2.

In another embodiment of this embodiment of this application, before the terminal performs step S103, the method provided in this embodiment of this application further includes: determining, by the terminal, at least the identification information allocated by the base station to the second frequency domain resource.

Optionally, in this embodiment of this application, the terminal may specifically determine, in the following manner, at least the identification information allocated by the base station to the second frequency domain resource:

Manner 1: The terminal receives the first identifier allocated by the base station to each of the plurality of frequency domain resources, to determine the identification information of the second frequency domain resource.

Optionally, that the terminal receives the first identifier allocated by the base station to each of the plurality of frequency domain resources, to determine the identification information of the second frequency domain resource may be implemented in a process in which the terminal receives the plurality of frequency domain resources configured by the base station for the terminal.

In addition, in this embodiment of this application, that the terminal receives the first identifier allocated by the base station to each of the plurality of frequency domain resources, to determine the identification information of the second frequency domain resource may be specifically implemented in the following manner:

The terminal receives the second identifier allocated by the base station to the uplink frequency domain resource and the downlink frequency domain resource that are included in each of the plurality of frequency domain resources, to determine identification information of the second uplink frequency domain resource and the second downlink frequency domain resource that are included in the second frequency domain resource.

For example, as described in the foregoing embodiment, if the terminal determines that an identifier of the identification information that is of the second frequency domain resource and that is carried in resource scheduling information is 01, the terminal determines, from the plurality of frequency domain resources, the second frequency domain resource corresponding to the identifier 01.

In addition, in this embodiment of this application, that the terminal receives the first identifier allocated by the base station to each of the plurality of frequency domain resources, to determine the identification information of the second frequency domain resource may be specifically implemented in the following manner:

When the terminal determines that the 1-bit indication carried in the second resource scheduling information is 1, the terminal determines to switch from a current frequency domain resource (namely, a frequency domain resource for receiving resource scheduling information, for example, the first frequency domain resource) to another frequency domain resource (for example, to the second frequency domain resource). This implementation is applicable to a scenario in which the base station configures two frequency domain resources for the terminal (for example, a scenario in which the base station configures only the first frequency domain resource and the second frequency domain resource for the terminal).

In a possible implementation, the second frequency domain resource in this embodiment of this application may be at least one of a second uplink frequency domain resource and a second downlink frequency domain resource. In other words, the second frequency domain resource may be the second uplink frequency domain resource, or may be the second downlink frequency domain resource, or may be the second uplink frequency domain resource and the second downlink frequency domain resource. In this way, the base station may jointly schedule the uplink frequency domain resource and the downlink frequency domain resource. In addition, it may be understood that the second resource allocation information corresponding to the second resource allocation type in the second frequency domain resource is also applicable to the second uplink frequency domain resource and the second downlink frequency domain resource. To be specific, the terminal determines a frequency domain resource used for uplink communication from the second uplink frequency domain resource based on the second resource allocation information, and determines a frequency domain resource used for downlink communication from the second downlink frequency domain resource based on the second resource allocation information.

Optionally, in this embodiment of this application, to reduce a quantity of blind detection times of the terminal, in an NR, a size of second resource scheduling information that supports uplink frequency domain resource scheduling may be set to be the same as a size of second resource scheduling information that supports downlink frequency domain resource scheduling, to be specific, a payload of the second resource scheduling information that supports uplink frequency domain resource scheduling may be set to be the same as a payload of the second resource scheduling information that supports downlink frequency domain resource scheduling.

In view that information about channel state information (Channel State Information, CSI) may be inaccurate or unavailable in a frequency domain resource switching process, to add a frequency domain diversity and improve data transmission reliability, in this embodiment of this application, the base station may further indicate, to the terminal, a mapping manner used by the second resource allocation information. Specifically, the base station may indicate, to the terminal in the following manner, the mapping manner used by the second resource allocation information:

In a manner, the terminal and the base station agree that, or the base station preconfigures, for the terminal, that the second resource allocation information corresponding to the second resource allocation type uses a distributed VRB mapping manner. In this case, when the terminal receives the second resource scheduling information, if determining that a DCI format of the second resource scheduling information is the fallback format used for frequency domain resource switching, the terminal determines that the second resource allocation information corresponding to the second resource allocation type in the second frequency domain resource uses the distributed VRB mapping manner. In this way, a frequency domain diversity can be added and data transmission reliability can be improved. Compared with LTE, in this manner, the base station does not need to further indicate, to the terminal, whether the second resource allocation information uses centralized VRB mapping or distributed VRB mapping, thereby reducing signaling overheads.

In another manner, the terminal and the base station agree that, or the base station preconfigures, for the terminal, that if resource scheduling information received by the terminal includes the identification information of the second frequency domain resource, the terminal determines that the second resource allocation information corresponding to the second resource allocation type uses a distributed VRB mapping manner. Specifically, the identification information of the second frequency domain resource in the second resource scheduling information is configured by using higher layer signaling. The higher layer signaling may be used to indicate that frequency domain resource switching is supported. When the identification information of the second frequency domain resource is configured at a higher layer, the second resource allocation information corresponding to the second frequency domain resource uses the distributed VRB mapping manner. Compared with LTE, in this manner, the base station does not need to further indicate, to the terminal, whether the second resource allocation information used for the second frequency domain resource uses centralized VRB mapping or distributed VRB mapping.

Certainly, it may be understood that the method provided in this embodiment of this application is also applicable to the following case: When or after the base station sends the first resource scheduling information and the second resource scheduling information to the terminal, the base station further sends indication information to the terminal, where the indication information is used to indicate that the second resource allocation information uses a distributed VRB mapping manner. The indication information may be carried in the second resource scheduling information, or may be sent to the terminal in another form. This is not limited in this embodiment of this application.

In another embodiment of this embodiment of this application, it may be understood that the implementations described in the foregoing embodiment are also applicable to the following case: The base station instructs the terminal to switch from a first uplink frequency domain resource to a second uplink frequency domain resource. For an uplink frequency domain resource, different uplink transmission waveforms usually support different resource allocation types. For example, the uplink transmission waveforms usually include a CP-OFDM waveform and a DFT-S-OFDM waveform, where resource allocation types supported in the CP-OFDM waveform are the first resource allocation type and the second resource allocation type, and a resource allocation type supported in the DFT-S-OFDM waveform is the second resource allocation type.

In view of different uplink transmission waveforms, in addition to the foregoing defined first resource scheduling information and second resource scheduling information, third resource scheduling information still needs to be added. The third resource scheduling information is used to schedule the first frequency domain resource and does not need to include frequency domain resource identification information, which is the same as content of the first resource scheduling information. A difference between the first resource scheduling information and the second resource scheduling information lies in that: a resource allocation type used by third resource allocation information in the third resource scheduling information is different from an allocation type of the first resource allocation information. In a possible manner, the first resource allocation information is the first resource allocation type, and the third resource allocation information is the second resource allocation type.

It should be noted that the first resource scheduling information and the third resource scheduling information are not sent simultaneously.

Therefore, when the base station sends at least one of the first resource scheduling information or the third resource scheduling information, and the second resource scheduling information to the terminal, the method provided in this embodiment of this application further includes:

S105. The base station sends a first message to the terminal when an uplink transmission waveform is a CP-OFDM cyclic prefix-orthogonal frequency division multiplexing waveform, where the first message is used to instruct the terminal to blindly detect the second resource scheduling information and the first resource scheduling information, or the first message is used to instruct the terminal to blindly detect the second resource scheduling information and third resource scheduling information.

S106. The base station sends a second message to the terminal when an uplink transmission waveform is a discrete fourier transform-spread-orthogonal frequency division multiplexing DFT-S-OFDM waveform, where the second message is used to instruct the terminal to blindly detect the first resource scheduling information and the second resource scheduling information. Alternatively, the base station may send no message, and the terminal uses the first resource scheduling information by default when determining that the waveform is the DFT-S-OFDM waveform.

Therefore, when the base station sends the at least one of the first resource scheduling information, the second resource scheduling information, and the third resource scheduling information to the terminal, the method provided in this embodiment of this application further includes:

S107. The terminal receives the first message sent by the base station.

S108. The terminal blindly detects the second resource scheduling information and the first resource scheduling information according to the first message, or the first message is used to instruct the terminal to blindly detect the second resource scheduling information and the third resource scheduling information.

Alternatively, S109 and S110 are performed. S109. The terminal receives the second message sent by the base station.

S109. The terminal blindly detects the first resource scheduling information and the second resource scheduling information according to the second message.

It may be understood that the base station and the terminal may negotiate with each other to reach the following agreement: When an uplink transmission waveform is a discrete fourier transform-spread-orthogonal frequency division multiplexing DFT-S-OFDM waveform, the terminal blindly detects the first resource scheduling information and the second resource scheduling information, or uses the first resource scheduling information; or when an uplink transmission waveform is a CP-OFDM cyclic prefix-orthogonal frequency division multiplexing waveform, the terminal blindly detects the second resource scheduling information and the first resource scheduling information, or the first message is used to instruct the terminal to blindly detect the second resource scheduling information and the third resource scheduling information. In this case, steps S105 to S108 may be omitted.

It may be understood that, in an implementation process of this embodiment of this application, the DCI in the first format uses the first resource allocation type, and the DCI in the second format uses the second resource allocation type. The DCI that is in the second format and that supports frequency domain resource switching corresponds to the second resource allocation type, or DCI that uses the second resource allocation type is used to indicate frequency domain resource switching, so that when a same frequency domain resource is allocated, a quantity of occupied bits decreases, thereby reducing a quantity of padding bits. This reduces system overheads.

According to the resource scheduling method provided in this embodiment of this application, one frequency domain resource is selected from the plurality of frequency domain resources as the second frequency domain resource, and then the network device sends the resource scheduling information to the communications device on the first frequency domain resource, to instruct, by using the resource scheduling information, the communications device to switch from the first frequency domain resource to the second frequency domain resource. In this way, after receiving the resource scheduling information, the communications device may determine, based on the identification information of the second frequency domain resource, a destination frequency domain resource (for example, the second frequency domain resource) to which the communications device needs to switch during cross-frequency-domain-resource scheduling, and may determine, based on the resource allocation information corresponding to the first resource allocation type in the second frequency domain resource, the frequency domain resource that is used to transmit data with the network device in the second frequency domain resource. This can implement not only cross-frequency-domain-resource scheduling but also resource allocation in the second frequency domain resource during cross-frequency-domain-resource scheduling. This reduces a latency compared with a conventional technical solution in which resource allocation in a frequency domain resource is performed after frequency domain resource switching is implemented. In addition, in this embodiment of this application, the resource allocation information corresponding to the second frequency domain resource is carried in the resource scheduling information, so that a waste of bits can be avoided during cross-frequency-domain-resource scheduling.

The solutions provided in the embodiments of this application are mainly described above from a perspective of interaction between network elements. It may be understood that, to implement the foregoing functions, the network elements such as the network device and the communications device include corresponding hardware structures and/or software modules for implementing the functions. A person skilled in the art should be easily aware that, the example units, algorithms, and steps described with reference to the embodiments disclosed in this specification can be implemented in the embodiments of this application by using hardware or a combination of hardware and computer software. Whether a function is performed by using hardware or hardware driven by computer software depends on particular applications and design constraint conditions of the technical solutions. A person skilled in the art may use different methods to implement the described functions for each particular application, but it should not be considered that the implementation goes beyond the scope of the embodiments of this application.

In the embodiments of this application, the network device, the communications device, and the like each may be divided into function modules according to the foregoing method examples. For example, each function module may be obtained through division corresponding to each function. Alternatively, two or more functions may be integrated into one processing module. The integrated module may be implemented in a form of hardware, or may be implemented in a form of a software function module. It should be noted that, in the embodiments of this application, the module division is an example, and is merely logical function division. During actual implementation, there may be another division manner.

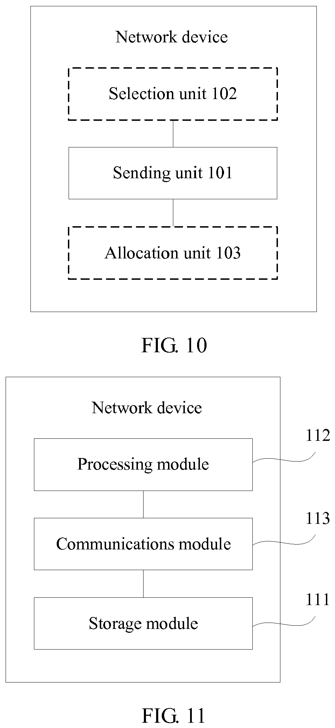

When an integrated unit is used, FIG. 10 is a possible schematic structural diagram of the network device in the foregoing embodiment. The network device includes a sending unit 101. The sending unit 101 is configured to support the network device in performing step S101, S105, or S106 in the foregoing embodiment. In addition, the network device provided in this embodiment of this application further includes: a selection unit 102, configured to select a second frequency domain resource from a plurality of frequency domain resources; and an allocation unit 103, where the allocation unit 103 is configured to support the network device in allocating identification information to each of the plurality of frequency domain resources; and/or is configured to perform another process in the technology described in this specification. All related content of the steps in the foregoing method embodiment can be cited in function descriptions of corresponding function modules, and details are not described herein again.

Based on hardware implementation, the sending unit 101 in this embodiment of this application may be a transmitter of the network device, and the transmitter usually may be integrated with a receiver of the network device to serve as a transceiver. Specifically, the transceiver may also be referred to as a communications interface. The allocation unit 103 and the selection unit 102 may be integrated into a processor of the network device.

When an integrated unit is used, FIG. 11 is a possible schematic diagram of a logical structure of the network device in the foregoing embodiment. The network device includes a processing module 112 and a communications module 113. The processing module 112 is configured to control and manage an action of the network device. For example, the processing module 112 is configured to support the network device in performing steps S105 and S106 in the foregoing embodiment. The communications module 113 is configured to support the network device in performing step S101 in the foregoing embodiment; and/or is configured to perform another process in the technology described in this specification. The network device may further include: a storage module 111, configured to store program code and data of the network device.

The processing module 112 may be a processor or controller, for example, may be a central processing unit, a general-purpose processor, a digital signal processor, an application-specific integrated circuit, a field programmable gate array or another programmable logic device, a transistor logic device, a hardware component, or any combination thereof. The processing module 112 may implement or execute various example logical blocks, modules, and circuits described with reference to content disclosed in the embodiments of this application. Alternatively, the processor may be a combination implementing a computing function, for example, a combination including one or more microprocessors, or a combination of a digital signal processor and a microprocessor. The communications module 113 may be a transceiver, a transceiver circuit, a communications interface, or the like. The storage module 111 may be a memory.

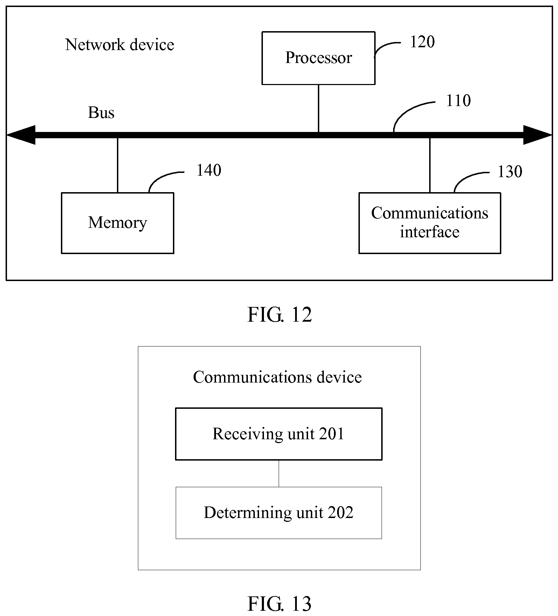

When the processing module 112 is a processor 120, the communications module 113 is a communications interface 130 or a transceiver, and the storage module 111 is a memory 140, the network device in this embodiment of this application may be a device shown in FIG. 12.

The communications interface 130, the processor 120, and the memory 140 are interconnected by using a bus 110. The bus 110 may be a PCI bus, an EISA bus, or the like. The bus may be classified as an address bus, a data bus, a control bus, or the like. For ease of representation, only one thick line is used to represent the bus in FIG. 12, but this does not mean that there is only one bus or only one type of bus. The memory 140 is configured to store program code and data of the network device. The communications interface 130 is configured to support communication between the network device and another device (for example, a communications device). The processor 120 is configured to support the network device in executing the program code and the data that are stored in the memory 140, to implement the resource scheduling method provided in the embodiments of this application.

When an integrated unit is used, FIG. 13 is a possible schematic structural diagram of the communications device in the foregoing embodiment. The communications device includes a receiving unit 201 and a determining unit 202. The receiving unit 201 is configured to support the communications device in performing steps S102, S107, and S108 in the foregoing embodiment. The determining unit 202 is configured to support the communications device in performing steps S103 and S104 in the foregoing embodiment; and/or is configured to perform another process in the technology described in this specification. All related content of the steps in the foregoing method embodiment can be cited in function descriptions of corresponding function modules, and details are not described herein again.

Based on hardware implementation, the receiving unit 201 in this embodiment of this application may be a receiver of the communications device, and the receiver usually may be integrated with a transmitter of the communications device to serve as a transceiver. Specifically, the transceiver may also be referred to as a communications interface. The determining unit 201 may be integrated into a processor of the communications device.

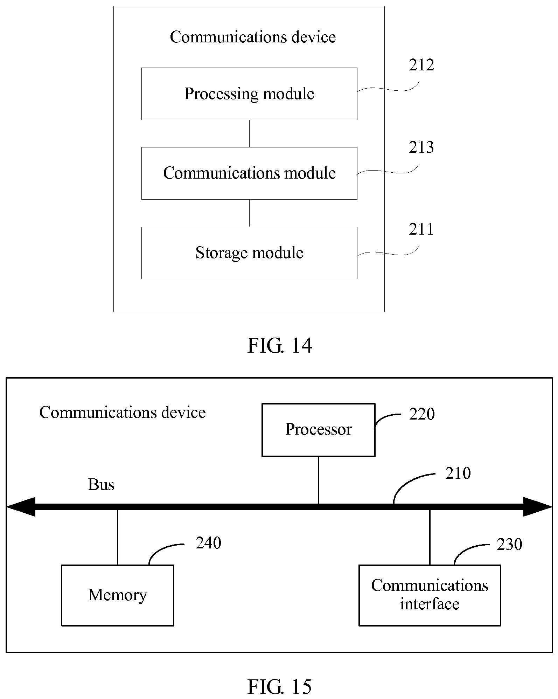

When an integrated unit is used, FIG. 14 is a possible schematic diagram of a logical structure of the communications device in the foregoing embodiment. The communications device includes a processing module 212 and a communications module 213. The processing module 212 is configured to control and manage an action of the communications device. For example, the processing module 212 is configured to support the communications device in performing steps S103 and S104 in the foregoing embodiment. The communications module 213 is configured to support the communications device in performing steps S102, S107, and S108 in the foregoing embodiment; and/or is configured to perform another process in the technology described in this specification. The communications device may further include: a storage module 211, configured to store program code and data of the communications device.

The processing module 212 may be a processor or controller, for example, may be a central processing unit, a general-purpose processor, a digital signal processor, an application-specific integrated circuit, a field programmable gate array or another programmable logic device, a transistor logic device, a hardware component, or any combination thereof. The processing module 212 may implement or execute various example logical blocks, modules, and circuits described with reference to content disclosed in the embodiments of this application. Alternatively, the processor may be a combination implementing a computing function, for example, a combination including one or more microprocessors, or a combination of a digital signal processor and a microprocessor. The communications module 213 may be a transceiver, a transceiver circuit, a communications interface, or the like. The storage module 211 may be a memory.

When the processing module 212 is a processor 220, the communications module 213 is a communications interface 130 or a transceiver, and the storage module 211 is a memory 240, the communications device in this embodiment of this application may be a device shown in FIG. 15.

The communications interface 230, the processor 220, and the memory 240 are interconnected by using a bus 210. The bus 210 may be a PCI bus, an EISA bus, or the like. The bus may be classified as an address bus, a data bus, a control bus, or the like. For ease of representation, only one thick line is used to represent the bus in FIG. 15, but this does not mean that there is only one bus or only one type of bus. The memory 240 is configured to store program code and data of the communications device. The communications interface 230 is configured to support communication between the communications device and another device (for example, a network device). The processor 220 is configured to support the communications device in executing the program code and the data that are stored in the memory 240, to implement the resource scheduling method provided in the embodiments of this application.

According to still another aspect, a computer storage medium is provided. The computer-readable storage medium stores an instruction. When the instruction is run on a network device, the network device is enabled to perform the resource scheduling method described in steps S101, S105, and S106 in the embodiment.

According to yet another aspect, a computer storage medium is provided. The computer-readable storage medium stores an instruction. When the instruction is run on a communications device, the communications device is enabled to perform the resource scheduling method described in steps S102, S103, S104, S107, and S108 in the foregoing embodiment.

According to another aspect, a computer program product including an instruction is provided. The computer program product stores the instruction. When the instruction is run on a network device, the network device is enabled to perform the resource scheduling method described in steps S101, S105, and S106 in the foregoing embodiment.

According to yet another aspect, a computer program product including an instruction is provided. The computer program product stores the instruction. When the instruction is run on a communications device, the communications device is enabled to perform the resource scheduling method described in steps S102, S103, S104, S107, and S108 in the foregoing embodiment.

In addition, an embodiment of this application provides a communications system, including the network device described in any one of FIG. 10, FIG. 11, and FIG. 12 and the communications device described in any one of FIG. 13, FIG. 14, and FIG. 15.

For explanations and beneficial effects of related content of any one of the apparatuses provided above, refer to the corresponding method embodiment provided above. Details are not described herein again.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although the embodiments of this application are described herein with reference to the embodiments, in a process of implementing the embodiments of this application that claims protection, a person skilled in the art may understand and implement another variation of the disclosed embodiments by viewing the accompanying drawings, disclosed content, and the appended claims. In the claims, the word "comprising" (comprising) does not exclude another component or step, and "a" or "one" does not exclude a case of "plurality of". A single processor or another unit may implement several functions enumerated in the claims. Some measures are recorded in the appended claims that are different from each other, but this does not mean that these measures cannot be combined to produce a better effect.

Although the embodiments of this application are described with reference to specific features and the embodiments thereof, apparently, various modifications and combinations may be made to the embodiments of this application without departing from the spirit and scope of the embodiments of this application. Correspondingly, the specification and accompanying drawings are merely example descriptions of the embodiments of this application that are defined by the appended claims, and are considered to cover any or all of modifications, variations, combinations, or equivalents in the scope of the embodiments of this application. Apparently, a person skilled in the art can make various modifications and variations to the embodiments of this application without departing from the spirit and scope of the embodiments of this application. In this way, the embodiments of this application are also intended to cover these modifications and variations provided that they fall within the scope of the claims of the embodiments of this application and equivalent technologies thereof.

**Claims**

1. A resource scheduling method, comprising:

   sending, by a network device, first resource scheduling information and second resource scheduling information to a communications device on a first frequency domain resource, wherein
   the first resource scheduling information comprises first resource allocation information, and the first resource allocation information is used to indicate a first resource in the first frequency domain resource;
   the second resource scheduling information comprises identification information of a second frequency domain resource and second resource allocation information, the second resource allocation information is used to indicate a second resource in the second frequency domain resource, and the second resource scheduling information is used to instruct to switch from the first frequency domain resource to the second frequency domain resource; and
   both the first frequency domain resource and the second frequency domain resource are frequency domain resources that belong to a carrier.

2. The resource scheduling method according to claim 1, wherein the first resource scheduling information and the second resource scheduling information meet at least one of the following conditions:

   a size of the first resource scheduling information is different from a size of the second resource scheduling information; and
   a format of the first resource scheduling information is different from a format of the second resource scheduling information.

3. The resource scheduling method according to claim 1 or 2, wherein the first resource scheduling information meets at least one of the following conditions:

   the first resource scheduling information corresponds to different sizes in different transmission manners; and
   the first resource scheduling information corresponds to different formats in different transmission manners.

4. The resource scheduling method according to any one of claims 1 to 3, wherein a transmission manner corresponding to the second resource scheduling information is a transmit diversity manner or a single-port manner.

5. The resource scheduling method according to any one of claims 1 to 4, wherein the second frequency domain resource comprises a second uplink frequency domain resource and a second downlink frequency domain resource, a center frequency point of the second uplink frequency domain resource is consistent with a center frequency point of the second downlink frequency domain resource, the identification information of the second frequency domain resource comprises a first identifier, and the first identifier indicates the second frequency domain resource.

6. The resource scheduling method according to any one of claims 1 to 4, wherein the second frequency domain resource comprises at least one of a second uplink frequency domain resource and a second downlink frequency domain resource.

7. The resource scheduling method according to claim 6, wherein the second resource scheduling information is in a same size when the second resource scheduling information is used to schedule the second uplink frequency domain resource and when the second resource scheduling information is used to schedule the second downlink frequency domain resource.

8. The resource scheduling method according to any one of claims 1 to 7, wherein the second resource allocation information indicates a frequency domain resource start point of the second frequency domain resource and a length of the second frequency domain resource.

9. A resource scheduling method, comprising:

receiving, by a communications device on a first frequency domain resource, first resource scheduling information and second resource scheduling information that are sent by a network device, wherein the first resource scheduling information comprises first resource allocation information, and the first resource allocation information is used to indicate a first resource in the first frequency domain resource; the second resource scheduling information comprises identification information of a second frequency domain resource and second resource allocation information, the second resource allocation information is used to indicate a second resource in the second frequency domain resource, and the second resource scheduling information is used to instruct to switch from the first frequency domain resource to the second frequency domain resource; and both the first frequency domain resource and the second frequency domain resource are frequency domain resources that belong to a carrier;
determining, by the communications device, the second frequency domain resource based on the identification information of the second frequency domain resource, and determining, based on the second resource allocation information, the second resource that is used to communicate with the network device in the second frequency domain resource; and
determining, by the communications device based on the first resource allocation information, the first resource that is used to communicate with the network device in the first frequency domain resource.

10. The resource scheduling method according to claim 9, wherein the first resource scheduling information and the second resource scheduling information meet at least one of the following conditions:

a size of the first resource scheduling information is different from a size of the second resource scheduling information; and
a format of the first resource scheduling information is different from a format of the second resource scheduling information.

11. The resource scheduling method according to claim 9 or 10, wherein the first resource scheduling information meets at least one of the following conditions:

the first resource scheduling information corresponds to different sizes in different transmission manners; and
the first resource scheduling information corresponds to different formats in different transmission manners.

12. The resource scheduling method according to any one of claims 9 to 11, wherein a transmission manner corresponding to the second resource scheduling information is a transmit diversity manner or a single-port manner.

13. The resource scheduling method according to any one of claims 9 to 12, wherein the second frequency domain resource comprises a second uplink frequency domain resource and a second downlink frequency domain resource, a center frequency point of the second uplink frequency domain resource is consistent with a center frequency point of the second downlink frequency domain resource, the identification information of the second frequency domain resource comprises a first identifier, and the first identifier indicates the second frequency domain resource.

14. The resource scheduling method according to any one of claims 9 to 12, wherein the second frequency domain resource is at least one of a second uplink frequency domain resource and a second downlink frequency domain resource.

15. The resource scheduling method according to claim 14, wherein the second resource scheduling information is in a same size when the second resource scheduling information is used to schedule the second uplink frequency domain resource and when the second resource scheduling information is used to schedule the second downlink frequency domain resource.

16. The resource scheduling method according to any one of claims 9 to 15, wherein the communications device determines the second resource in the second frequency domain resource based on a frequency domain resource start point and a frequency domain resource length that are indicated by the second resource allocation information.

17. A network device, comprising a memory, a processor, a bus, and a communications interface, wherein the memory stores an instruction, the processor is connected to the memory by using the bus, and the processor runs code in the memory, so that the network device performs the resource scheduling method according to any one of claims 1 to 8.

18. A communications device, comprising a memory, a processor, a bus, and a communications interface, wherein the memory stores an instruction, the processor is connected to the memory by using the bus, and the communications interface is configured to perform a message sending/receiving operation in the communications device in the resource scheduling method according to any one of claims 9 to 16; and
the processor runs the instruction in the memory to perform a processing or control operation in the communications device in the resource scheduling method according to any one of claims 9 to 16.

19. A computer-readable storage medium, wherein the computer-readable storage medium is applied to a network device, the computer-readable storage medium stores an instruction, and when the instruction is run on a computer, the computer is enabled to perform the resource scheduling method according to any one of claims 1 to 8.

20. A computer-readable storage medium, wherein the computer-readable storage medium is applied to a communications device, the computer-readable storage medium stores an instruction, and when the instruction is run on a computer, the computer is enabled to perform the resource scheduling method according to any one of claims 9 to 16.

21. A computer program product, wherein the computer program product is applied to a network device, and when the program is run on a computing device, the computer is enabled to perform the resource scheduling method according to any one of claims 1 to 8.

22. A computer program product, wherein the computer program product is applied to a communications device, and when the program is run on a computing device, the computer is enabled to perform the resource scheduling method according to any one of claims 9 to 16.

EP 3 570 611 A1

FIG. 1

FIG. 2

Frequency
domain

System
bandwidth

| Bandwidth part 0 |
| Bandwidth part 1 |
| Bandwidth part 2 |

FIG. 3

Frequency
domain

Resource
that can be
used for data
transmission

PRB X2−1

⋮

PRB 1

PRB 0

Time
domain

FIG. 4

RBG

RB

BWP bandwidth

FIG. 5

Start point

Length=6

RB

BWP bandwidth

FIG. 6

| Base station | | Terminal |
|---|---|---|

S101. Send first resource scheduling information and second resource scheduling information on a first frequency domain resource

S102. Receive the first resource scheduling information and the second resource scheduling information on the first frequency domain resource

S103. Determine a second frequency domain resource based on identification information of the second frequency domain resource, and determine, based on second resource allocation information, a second resource that is used to perform transmission with a network device in the second frequency domain resource

S104. Determine, from the first frequency domain resource based on first resource allocation information, a first resource used to perform transmission with the network device

FIG. 7

EP 3 570 611 A1

FIG. 8

FIG. 9

35

Network device

Selection unit 102

Sending unit 101

Allocation unit 103

FIG. 10

Network device

Processing module — 112

Communications module — 113

Storage module — 111

FIG. 11

Network device

Processor — 120

Bus — 110

140 — Memory

130 — Communications interface

FIG. 12

Communications device

Receiving unit 201

Determining unit 202

FIG. 13

Communications device

Processing module — 212

Communications module — 213

Storage module — 211

FIG. 14

Communications device

Processor — 220

Bus

— 210

— 240

Memory

— 230

Communications interface

FIG. 15

## INTERNATIONAL SEARCH REPORT

| | International application No. |
| --- | --- |
| | **PCT/CN2018/106053** |

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNABS; CNTXT; USTXT; WOTXT; VEN; 3GPP; CNKI: 资源, 频域, 频率, 时域, 调度, 配置, 分配, 指配, 切换, 重选, 新空口, 新无线, 5G, resource, RB, frequency, time, schedule, assignment, allocate, handover, handoff, reselect, NR, new radio

### C. DOCUMENTS CONSIDERED TO BE RELEVANT

| Category* | Citation of document, with indication, where appropriate, of the relevant passages | Relevant to claim No. |
| --- | --- | --- |
| X | CN 101296503 A (HUAWEI TECHNOLOGIES CO., LTD.) 29 October 2008 (2008-10-29) description, p. 4, line 5 to p. 5, line 21, and figure 1 | 1-22 |
| A | CN 102550107 A (QUALCOMM INC.) 04 July 2012 (2012-07-04) entire document | 1-22 |
| A | CN 102958184 A (HUAWEI TECHNOLOGIES CO., LTD.) 06 March 2013 (2013-03-06) entire document | 1-22 |
| A | US 9161319 B2 (SAMSUNG ELECTRONICS CO., LTD.) 13 October 2015 (2015-10-13) entire document | 1-22 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 November 2018** | **27 November 2018** |

| Name and mailing address of the ISA/CN | Authorized officer |
| --- | --- |
| **State Intellectual Property Office of the P. R. China (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/106053**

| Patent document cited in search report | | | Publication date (day/month/year) | Patent family member(s) | | | Publication date (day/month/year) |
|---|---|---|---|---|---|---|---|
| CN | 101296503 | A | 29 October 2008 | None | | | |
| CN | 102550107 | A | 04 July 2012 | KR | 101374582 | B1 | 17 March 2014 |
| | | | | WO | 2011035340 | A1 | 24 March 2011 |
| | | | | US | 2011066738 | A1 | 17 March 2011 |
| | | | | EP | 2478736 | A1 | 25 July 2012 |
| | | | | CN | 102550107 | B | 22 April 2015 |
| | | | | US | 2012124231 | A9 | 17 May 2012 |
| | | | | KR | 20120117729 | A | 24 October 2012 |
| | | | | EP | 2478736 | B1 | 28 August 2013 |
| | | | | JP | 5335999 | B2 | 06 November 2013 |
| | | | | JP | 2013509011 | A | 07 March 2013 |
| | | | | IN | 201202041 | P4 | 26 April 2013 |
| CN | 102958184 | A | 06 March 2013 | US | 9629138 | B2 | 18 April 2017 |
| | | | | EP | 2750429 | A1 | 02 July 2014 |
| | | | | CN | 102958184 | B | 22 February 2017 |
| | | | | EP | 2750429 | A4 | 10 September 2014 |
| | | | | WO | 2013026418 | A1 | 28 February 2013 |
| | | | | US | 2014169312 | A1 | 19 June 2014 |
| | | | | EP | 2750429 | B1 | 10 October 2018 |
| US | 9161319 | B2 | 13 October 2015 | US | 2012113920 | A1 | 10 May 2012 |
| | | | | KR | 20120049804 | A | 17 May 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710943984